(19) **Europäisches Patentamt**
**European Patent Office**
**Office européen des brevets**

(11) **EP 4 275 917 B1**

(12) **EUROPEAN PATENT SPECIFICATION**

(45) Date of publication and mention
of the grant of the patent:
**06.11.2024 Bulletin 2024/45**

(21) Application number: **23164363.6**

(22) Date of filing: **27.03.2023**

(51) International Patent Classification (IPC):
**B60C 11/03** $^{(2006.01)}$       **B60C 15/06** $^{(2006.01)}$

(52) Cooperative Patent Classification (CPC):
**B60C 11/032; B60C 15/06;** B60C 2011/0383;
B60C 2015/0614; B60C 2015/065;
B60C 2015/0678; Y02T 10/86

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **12.05.2022 JP 2022078802**

(43) Date of publication of application:
**15.11.2023 Bulletin 2023/46**

(73) Proprietor: **Sumitomo Rubber Industries, Ltd.
Kobe-shi, Hyogo-ken 651-0072 (JP)**

(72) Inventor: **HAMAMURA, Kenji
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 2 048 192     EP-A1- 3 202 594
EP-A1- 3 587 144     EP-A1- 3 599 108**

**Description**

TECHNICAL FIELD

The present invention relates to a tire.

BACKGROUND OF THE INVENTION

Recently, advances in tread rubber for tire are remarkable, and not only improvement in low heat generation of a tread rubber but also contribution to heat generation of a tire member other than the tread rubber are actively considered. WO2019/045062 describes that rolling resistance of a tire can be reduced by providing the tire with a rubber chafer part (clinch part) that is formed of a specific rubber composition. Further prior art rubber compositions used in a tread part and a clinch part of a tire are disclosed in the following documents EP 3 599 108 A1, EP 3 587 144 A1, EP 3 202 594 A1 and EP 2 048 192 A1.

SUMMARY OF THE INVENTION

On the other hand, in recent years where development of highways and the like have been also promoted, there has been in a situation where it is also not rare for drivers to drive at high speed, and moreover, emphasis has been placed on appearance of beauty of a tire. In such a situation, there is a concern that, if appearance of beauty of a tire has been marred at the time of maintenance such as automobile inspection, the tire may be exchanged although its performance regarding quality is secured. Accordingly, it is considered that there is a room for improvement in performance on appearance of beauty after repeatedly performing high-speed running.
It is an object of the present invention to improve performance on appearance of beauty after high-speed running.
The present invention relates to:
a tire according to claim 1.
According to the present invention, performance on appearance of beauty after high-speed running can be improved.

BRIEF DESCRIPTION OF THE DRAWINGS

FIG. 1 a schematic view of a grounding surface of a tire when a tread is pressed against a flat surface.
FIG. 2 is a schematic partial cross-sectional view of a tire according to one embodiment of the present invention.

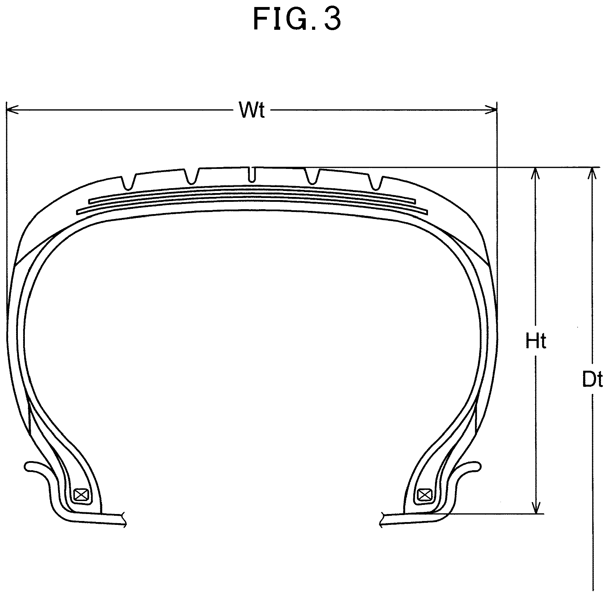

FIG. 3 is a view showing a tire cross-sectional width Wt, a tire cross-sectional height Ht, and a tire outer diameter Dt on a cross section of the tire.

DETAILED DESCRIPTION

The tire that is one embodiment of the present invention is a tire comprising a tread part and a clinch part, wherein a ratio ($G/W_L$) of a tire weight G (kg) to the maximum load capacity $W_L$ (kg) of the tire is 0.0150 or less, wherein the clinch part is composed of a rubber composition comprising a rubber component and a filler, wherein a tan $\delta$ at 70°C of the rubber composition constituting the clinch part (70°C tan $\delta_C$) is 0.11 or less, and wherein a product (70°CE*$_C$ $\times$ $G/W_L$) of a complex elastic modulus at 70°C (MPa) of the rubber composition constituting the clinch part (70°CE*$_C$) and $G/W_L$ is 0.075 or more.
When the tire weight relative to the maximum load capacity of the tire and a physical property of viscoelasticity of the rubber composition constituting the clinch part satisfy the above-described requirements, the tire obtained is remarkably improved in performance on appearance of beauty after high-speed running. The reason for that is considered as follows, although the following consideration is not intended to be bound by any theory.
The ratio of the tire weight to the maximum load capacity of the tire of the present invention is 0.015 or less, thereby making the tire of the present invention lightweight as compared with conventional tires For this reason, (1) since each member has a thin thickness due to the weight saving, it becomes easy to release heat generated during high-speed running to the outside, it becomes difficult to cause an excess rise in temperature, and it is considered that migration and deposition of a wax component contained in a rubber composition of the clinch part or the like due to thermal diffusion become easily suppressed. Moreover, (2) by decreasing the loss tangent tan $\delta$ of the clinch part at a high temperature to suppress heat generation of the clinch part, wax in a rubber is suppressed from easily migrating. On the other hand, when the ratio of the tire weight to the maximum load capacity of the tire is decreased, an amount of deformation of the clinch part increases, and thus there is also a concern about occurrence of a crack. However, (3) deformation of the clinch part during a rolling motion is suppressed by increasing the rigidity (complex elastic modulus E*) of the clinch part at a high temperature with respect to the ratio of the tire weight to the maximum load capacity of the tire, and thus it is considered that occurrence of a crack on a surface and internal heat generation due to the deformation can be suppressed. For the above-described reasons, the clinch part is made easy to release heat and thus falls into a state where it is difficult for heat generation to occur, and an amount of deformation of the clinch part also is kept small. Accordingly, migration of and deposition of wax in the rubber can be suppressed and occurrence of a crack due to the deformation can also be suppressed, and therefore it is considered that a notable effect of remarkably improving performance on appearance of beauty even after high-speed running is achieved.

$G/W_L$ is preferably 0.0140 or less, further preferably 0.0135 or less.

When $G/W_L$ is within the above-described ranges and the tire weight is lightened with respect to the maximum load capacity of the tire, it becomes easy to release heat in the tire, and it is considered that the performance on appearance of beauty after high-speed running can be improved more.

$70°CE*_C$ is preferably 10.0 MPa or more.

When $70°CE*_C$ is within the above-described range, an amount of deformation of the clinch part is reduced, and thus it is considered that occurrence of a crack can be easily suppressed.

A modulus at 100% elongation at 23°C of the rubber composition constituting the clinch part (M100c) is preferably 5.0 MPa or more.

When not only the rigidity (E*) of the clinch part with low distortion but also the rigidity (M100) with high distortion is increased, heat generation can be suppressed for inputs from a wide variety of road surfaces, and thus it is considered that the performance on appearance of beauty after high-speed running can be improved more.

$70°C \tan \delta_C$ is preferably 0.065 or less.

When heat generation of a rubber of the clinch part is reduced, heat generation during high-speed running is suppressed, and thus it is considered that thermal diffusion by wax or the like can be easily suppressed.

When a tire cross-sectional width is defined as Wt (mm) and a tire outer diameter is defined as Dt (mm), Wt and Dt preferably satisfy the following inequality (1).

$$1800 \leq (Dt^2 \times \pi/4)/Wt \leq 2827.4 \quad \cdots \quad (1)$$

When an area of the tire viewed in a lateral direction (i.e., $(Dt/2)^2 \times \pi = Dt^2 \times \pi/4$) is increased with respect to the tire cross-sectional width Wt, heat-release performance of a side part is improved, and thus it is considered that the performance on appearance of beauty after high-speed running is improved more.

When a virtual volume of a space occupied by the tire is defined as V ($mm^3$), V and Wt preferably satisfy the following inequality (2).

$$[(V + 1.5 \times 10^7)/Wt] \leq 2.88 \times 10^5 \quad \cdots \quad (2)$$

When the virtual volume V of the space occupied by the tire is decreased along with a decrease of the tire cross-sectional width Wt to decrease the volume of the tire itself, a rate of growth of an outer diameter due to centrifugal force can be reduced, and thus it is considered that an amount of deformation of the side part can be decreased.

A total content of an isoprene-based rubber and a butadiene rubber in the rubber component constituting the clinch part is preferably greater than 80% by mass.

When the total content of the isoprene-based rubber and the butadiene rubber in this rubber component is within the above-described range, a phase-separated structure is formed in the rubber, force due to the deformation is dispersed on interfaces between its phases, and thus it is considered that a crack can be easily suppressed.

A total content of the filler based on 100 parts by mass of the rubber component in the rubber composition constituting the clinch part is preferably less than 65 parts by mass.

When the total content of the filler in the rubber composition is within the above-described range, it becomes easy to suppress heat generation due to friction between the rubber component and the fillers, and thus it is considered that the performance on appearance of beauty after high-speed running can be easily improved.

The rubber composition constituting the clinch part preferably comprises 35 parts by mass or more of carbon black whose average primary particle size is 40 nm or more, based on 100 parts by mass of the rubber component.

When the rubber composition comprises carbon black having a predetermined average primary particle size, rubber molecules bound by carbon black are minimized, and it becomes easy for the rubber molecules to flexibly move. Accordingly, for an input, stress can be mitigated even by polymer molecule chains, and thus it is considered that the performance on appearance of beauty after high-speed running is improved more.

A ratio (70°C tan $\delta_C$/70°CE*$_C$) of 70°C tan $\delta_C$ to 70°CE*$_C$ (MPa) is preferably 0.004 or more and 0.020 or less.

When 70°C tan $\delta_C$/70°CE*$_C$ is within the above-described range, heat generation can be suppressed during a rolling motion of the tire, so that it becomes easy to suppress deposition of wax or the like, and moreover, it is considered that it becomes easy to suppress occurrence of a crack caused by a decrease in strength of the clinch part due to an increase in temperature.

When the maximum thickness of the clinch part is defined as T (mm), a product (T × 70°C tan $\delta_C$) of T and 70°C tan $\delta_C$ is preferably less than 0.50.

When T × 70°C tan $\delta_C$ is within the above-described range, effects of suppressing heat generation in the clinch part and improving heat release performance can be obtained, and thus it is considered that performance on appearance of beauty after high-speed running can be easily improved.

A product (T × M100c) of T and M100c (MPa) is preferably greater than 15.0.

When T × M100c is within the above-described range, it is considered that deformation of the clinch part can be easily suppressed.

A tan $\delta$ at 30°C of the rubber composition constituting the tread part (30°C tan $\delta_T$) is preferably 0.18 or less.

A rise in temperature of the tire during high-speed running can be suppressed by suppressing heat generation of the tread part. As a result, deformation of the clinch part is suppressed, and thus it is considered that performance on appearance of beauty after high-speed running can be easily improved.

A ratio (30°C tan $\delta_T$/G) of 30°C tan $\delta_T$ to the tire weight G (kg) is preferably greater than 0.010.

The lighter the tire weight becomes, the more difficult the mitigation of a shock caused by bumps of a road surface becomes, and deformation in a case where the shock is applied tends to become larger than the deformation during the rolling motion. When 30°C tan $\delta_T$/G is within the above-described range, heat generation of a tread rubber becomes improved depending on the tire weight. As a result, energy is easily absorbed by the tread rubber, deformation of the clinch part can be decreased, and thus it is considered that it becomes easy to improve performance on appearance of beauty after high-speed running.

When, in the tread part of the present invention, an area of the entirety of land parts is defined as Sr and a total area of center land parts is defined as $S_{ce}$, $S_{ce}$/Sr is preferably 0.35 or more and 0.80 or less.

When $S_{ce}$/Sr is within the above-described range, the rigidity in a center region of the tread part is optimized, the tread part also becomes capable of absorbing a shock when propagated, and thus it is considered that an excessive deformation of the clinch part is suppressed.

At least one land part preferably has one or more small apertures whose opening areas to a tread surface are 0.1 mm$^2$ or more and 15 mm$^2$ or less.

A negative influence on other performances is prevented by providing a small aperture having the above-described opening area, and a surface area of the tread part can be increased. As a result, heat release performance in the tread part becomes good, and thus it is considered that rises in temperatures of the side part and the clinch part can be suppressed.

<Definition>

A "standardized rim" is a rim defined for each tire in a standard system including a standard, on which the tire is based, by the standard, for example, a "standard rim" in JATMA, "Design Rim" in TRA, or "Measuring Rim" in ETRTO. Besides, in a case of a tire whose size is not defined in the above-described standard system, the "standardized rim" is regarded as a rim that can be rim-assembled to such a tire and that has the narrowest width among rims having a minimum diameter and not causing air leakage between the rims and the tire.

A "standardized internal pressure" is an air pressure defined for each tire in a standard system including a standard, on which the tire is based, by the standard, for example, a "MAXIMUM AIR PRESSURE" in JATMA, a maximum value described in the table "TIRE LOAD LIMITS AT VARIOUS COLD INFLATION PRESSURES" in TRA, or "INFLATION PRESSURE" in ETRTO. Besides, in a case of a tire whose size is not defined in the above-described standard system, the standardized internal pressure is regarded as being 250 kPa.

A "standardized state" is a state in which the tire is rim-assembled to a standardized rim, filled with air at a standardized internal pressure, and applied with no load. Besides, in a case of a tire whose size is not defined in the above-described standard system, the standardized state is regarded as a state in which the tire is rim-assembled to the rim having the minimum diameter, filled with air at 250 kPa, and applied with no load.

A "tire weight G (kg)" is a weight of a single tire excluding a weight of a rim. Moreover, in a case where a noise suppressing material, a sealant, and a sensor are attached to a tire inner cavity part, G is a value including weights of these elements.

The "maximum load capacity ($W_L$) (kg)" is a value calculated by the following equations (3) and (4) when the tire cross-sectional width measured in the standardized state is defined as Wt (mm), the tire cross-sectional height is defined as Ht (mm), and the tire outer diameter is defined as Dt (mm). V (mm$^3$) denotes a virtual volume of a space occupied by the tire. The tire cross-sectional width Wt is a maximum width between outer surfaces of sidewalls excluding, if any, patterns, letters, or the like, in the above-described state. The tire cross-sectional height Ht is a distance from a bottom surface of a bead part to an outermost surface of a tread and is one-half of a difference between the outer diameter of the tire and a nominal size of a rim diameter.

$$V = \{(Dt/2)^2 - (Dt/2 - Ht)^2\} \times \pi \times Wt \ \cdots \ (3)$$

$$W_L = 0.000011 \times V + 100 \ \cdots \ (4)$$

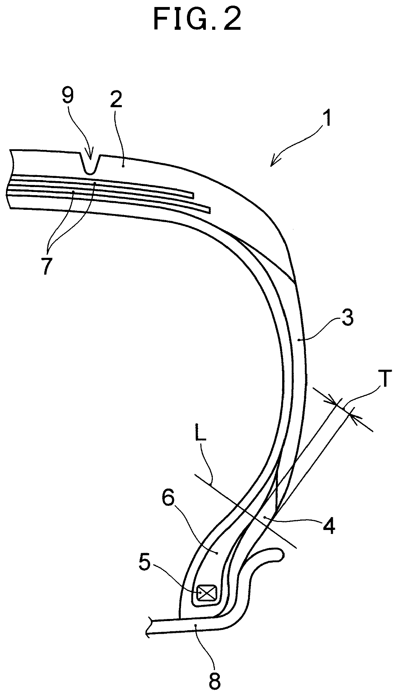

The "maximum thickness of the clinch part" is a maximum thickness T (mm) measured along a normal line L to an interface on an inner side of a clinch part 4 in a tire width direction (see FIG. 2). Besides, the "maximum thickness of the clinch part" is measured in a state where a width of a bead part is made to match a width of the standardized rim after cutting the tire along a plane including a tire rotation axis. Moreover, in a case where the clinch part comes into contact with another member on the inner side in the tire width direction and a difference in level occurs due to a shape of the other member, a length at a position of the difference in level shall be excluded. For example, in a case where a folded portion of a carcass layer overlaps the clinch part, a thickness at an end of the folded portion of the carcass layer is excluded.

"Grooves" including a circumferential groove and a width direction groove refer to depressions whose widths are larger than at least 2.0 mm. On the other hand, a "sipe" refers to a narrow notch whose width is 2.0 mm or less, preferably 0.5 to 1. 5 mm.

A "small aperture" refers to an opening that extends from inside the tread and opens to a tread grounding face.

A "content of a plasticizer" also comprises an amount of a plasticizer contained in an extended rubber component previously extended with the plasticizer such as oil, a resin component, and a liquid rubber. Moreover, the same applies to a content of oil, a content of a resin component, and a content of a liquid rubber, and for example, in a case where the extending component is oil, the extending oil is included in the content of oil.

<Measuring method>

A "70°C tan $\delta$" is a loss tangent measured under a condition of a temperature at 70°C, an initial strain of 10%, a dynamic strain of 1%, a frequency of 10 Hz, and an extension mode. A sample for measurement of 70°C tan $\delta$ is a vulcanized rubber composition having a length of 20 mm, a width of 4 mm, and a thickness of 1 mm. In a case where the sample is prepared by being cut out of a tire, the sample is cut out of the clinch part 4 of the tire such that a tangential direction to a tire circumferential direction becomes a long side and a direction of the normal line to the interface on the inner side of the clinch part 4 in the tire width direction becomes a thickness direction.

A "70°CE*" is a complex elastic modulus (MPa) measured under a condition of a temperature at 70°C, an initial strain of 10% a dynamic strain of 1 %, a frequency of 10 Hz, and an extension mode. A sample for measurement of 70°CE* is prepared in the same manner as in the case of 70°C tan $\delta$.

A "M100" is a stress (MPa) at 100% elongation measured when, after preparing a No 7. dumbbell-shaped test piece of 1 mm in thickness that is cut out of a clinch part of each test tire such that the tangential direction to the tire circumferential direction becomes a tensile direction, a tensile test is performed in accordance with JIS K6251 "Rubber, vulcanized or thermoplastics-Determination of tensile stress-strain properties" under an atmosphere at 23°C under a condition of a tension rate of 3.3 mm/sec.

A "30°C tan $\delta$" is a loss tangent measured under a condition of a temperature at 30°C, a dynamic strain of 1%, a frequency of 10 Hz, and an extension mode. A sample for measurement of 30°C tan $\delta$ is a vulcanized rubber composition having a length of 20 mm, a width of 4 mm, and a thickness of 1 mm. In a case where the sample is prepared by being cut out of a tire, the sample is cut out of the tread part 2 of the tire such that the tangential direction to the tire circumferential direction becomes a long side and the tire width direction becomes a thickness direction. In a case where the tread part comprises two or more rubber layers, the sample is cut out of the rubber layer constituting the tread surface at the same manner above.

The opening area of the small aperture to the tread surface, the area Sr of the entire land part, and the total area $S_{ce}$ of the center land parts are calculated from a grounding shape of the tire. The grounding shape is obtained by assembling the tire to a standardized rim, filling the tire with air at a standardized internal pressure, and leaving the tire to stand at 25°C for 24 hours, followed by applying ink to a tire tread surface, imposing a load of the maximum load capacity on the tire to press the tire tread surface on cardboard (a camber angle is 0°), and performing transcription to a paper. Additionally, the tire is rotated in 72 degrees increments in the circumferential direction, and the transcription is performed at five portions of the tire. That is, grounding shapes are obtained five times. An actual grounding area is obtained as an average value of areas of the five inked portions. From the obtained grounding shapes, in a case where shoulder land parts each have not only a lateral groove and a sipe that extend across the shoulder land parts but also, if any, a small aperture, a sum of areas of the shoulder land parts, in which all of the lateral groove, the sipe, and the small aperture are filled, is defined as a total area of the shoulder land parts, and in a case where center land parts each have not only a lateral groove and a sipe that extend across the center land parts but also, if any, a small aperture, a sum of areas of the center land parts, in which all of the lateral groove, the sipe, and the small aperture are filled, is defined as a total area of the center land parts. Additionally, a sum of the total area of the shoulder land parts and the total area of the center land parts is defined as an area of the entirety of the land parts.

A "styrene content" is a value calculated by $^1$H-NMR measurement and is applied to a rubber component having a repeating unit derived from styrene such as, for example, a SBR. A "cis content (cis-1,4-bond butadiene unit amount)" is a value calculated in accordance with JIS K 6239-2:2017 by an infrared absorption spectrometry and is applied to a rubber component having a repeating unit derived from butadiene such as, for example, a BR.

An "average primary particle size of carbon black" can be calculated by observing carbon black with a transmission or scanning electron microscope, measuring 400 or more primary particles of carbon black observed in the field of view, and averaging them. A "nitrogen adsorption specific surface area ($N_2SA$) of carbon black" is measured according to JIS K 6217-2:2017. An "average primary particle size of silica" can be calculated by observing silica with a transmission or scanning electron microscope, measuring 400 or more primary particles of silica observed in the field of view, and averaging them. A "nitrogen adsorption specific surface area ($N_2SA$) of silica" is measured by a BET method according to ASTM D3037-93.

A procedure for producing a tire that is one embodiment of the present invention will be described below in detail. However, the following descriptions are illustrative for explaining the present invention and are not intended to limit the technical scope of the present invention to this description range only. The invention is only limited by the scope of the appended claims.

<Tire>

In the tire of the present invention, the ratio ($G/W_L$) of the tire weight G (kg) to the maximum load capacity $W_L$ (kg) is 0.0150 or less, preferably 0.0145 or less, more preferably 0.0140 or less, further preferably 0.0135 or less, particularly preferably 0.0133 or less, from the viewpoint of effects of the present invention. On the other hand, a lower limit value of $G/W_L$ is not particularly limited and can be set to, for example, 0.0080 or more, 0.0090 or more, 0.0100 or more, 0.0110 or more, 0.0115 or more, or 0.0120 or more. Besides, the tire weight G can be changed by a usual method, that is, the tire weight G can be increased by increasing the specific gravity of the tire or by increasing a thickness of each member of the tire and can also be decreased in a reverse manner.

The maximum load capacity $W_L$ (kg) is preferably 300 or more, more preferably 350 or more, further preferably 400 or more, particularly preferably 450 or more, from the viewpoint of better exhibiting the effects of the present invention. Moreover, the maximum load capacity $W_L$ (kg) can be set to, for example, 1300 or less, 1200 or less, 1100 or less, 1000 or less, 900 or less, 800 or less, 700 or less, or 650 or less, from the viewpoint of better exhibiting the effects of the present invention. Besides, the maximum load capacity $W_L$ can be increased by increasing the virtual volume V of the space occupied by the tire and can also be decreased in a reverse manner.

In the tire of the present invention, when the tire cross-sectional width measured in a standardized state is defined as Wt (mm) and the tire outer diameter measured in the standardized state is defined as Dt (mm), Wt and Dt preferably satisfy the following inequality (1).

$$1800 \leq (Dt^2 \times \pi/4)/Wt \leq 2827.4 \ \cdots \ (1)$$

When an area of the tire viewed in a lateral direction (i.e., $(Dt/2)^2 \times \pi = Dt^2 \times \pi/4$) is increased with respect to the tire cross-sectional width Wt, heat-release performance of a side part is improved, and thus it is considered that fuel efficiency is improved more.

Here, there is a relationship in which a value in the inequality (1) increases as Dt increases, and conversely, it decreases as Dt decreases, whereas the value in the inequality (1) decreases as Wt increases, and conversely, it increases as Wt decreases. Accordingly, by paying attention to this point, adjustment can be made so that Dt and Wt satisfy the inequality (1), by adjusting Dt and Wt. Besides, the value in the inequality (1) is preferably 1850 or more, more preferably 1900 or more. Moreover, the value in the inequality (1) is preferably 2800 or less, more preferably 2700 or less, further preferably 2600 or less, particularly preferably 2500 or less.

Specific examples of a tire size satisfying the inequality (1) include 125/65R19, 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, 195/55R20, and the like.

An aspect ratio of the tire is preferably 40% or more, more preferably 45% or more, further preferably 50% or more, particularly preferably 55% or more. When the aspect ratio is within the above-described ranges, the height of the side part of the tire is increased and local deformation of the tire can be suppressed, so that durability of the tire can be further improved. Besides, the aspect ratio (%) is calculated from a cross-sectional height Ht (mm) of the tire in a standardized internal pressure and a cross-sectional width Wt (mm) of the tire in the standardized internal pressure to obtain (Ht/Wt) $\times$ 100.

A tire outer diameter Dt is preferably 515 mm or more, more preferably 558 mm or more, further preferably 585 mm or more, particularly preferably 630 mm or more. Moreover, the tire outer diameter Dt is preferably less than 843 mm, more preferably less than 725 mm, further preferably less than 707 mm, further preferably less than 685 mm, particularly preferably less than 655 mm.

The tire cross-sectional width Wt is preferably 115 mm or more, more preferably 125 mm or more, further preferably 150 mm or more, particularly preferably 170 mm or more. Moreover, the tire cross-sectional width Wt is preferably less than 305 mm, more preferably less than 245 mm, further preferably less than 210 mm, particularly preferably less than 200 mm.

The tire cross-sectional height Ht is preferably 37 mm or more, more preferably 60 mm or more, further preferably 80 mm or more. Moreover, the tire cross-sectional height Ht is preferably less than 180 mm, more preferably less than 152 mm, further preferably less than 130 mm, particularly preferably less than 115 mm.

The virtual volume V of the space occupied by the tire is preferably $1.2 \times 10^7$ mm$^3$ or more, more preferably $1.6 \times 10^7$ mm$^3$ or more, further preferably $2.0 \times 10^7$ mm$^3$ or more. On the other hand, the virtual volume V is preferably less than $8.8 \times 10^7$ mm$^3$, more preferably less than $6.6 \times 10^7$ mm$^3$, further preferably less than $4.4 \times 10^7$ mm$^3$, particularly preferably less than $3.9 \times 10^7$ mm$^3$.

The virtual volume V of the space occupied by the tire and the tire cross-sectional width Wt preferably satisfy the following inequality (2).

$$[(V + 1.5 \times 10^7)/Wt)] \leq 2.88 \times 10^5 \quad \cdots \quad (2)$$

When the virtual volume V of the space occupied by the tire is decreased along with a decrease of the tire cross-sectional width Wt to decrease the volume of the tire itself, a rate of growth of the outer diameter due to centrifugal force can be reduced, and thus it is considered that an amount of deformation of the side part can be decreased.

The value in the inequality (2) is preferably $2.85 \times 10^5$ or less, more preferably $2.80 \times 10^5$ or less, further preferably $2.75 \times 10^5$ or less. Moreover, the value in the inequality (2) is preferably $2.00 \times 10^5$ or more, more preferably $2.10 \times 10^5$ or more, further preferably $2.20 \times 10^5$ or more.

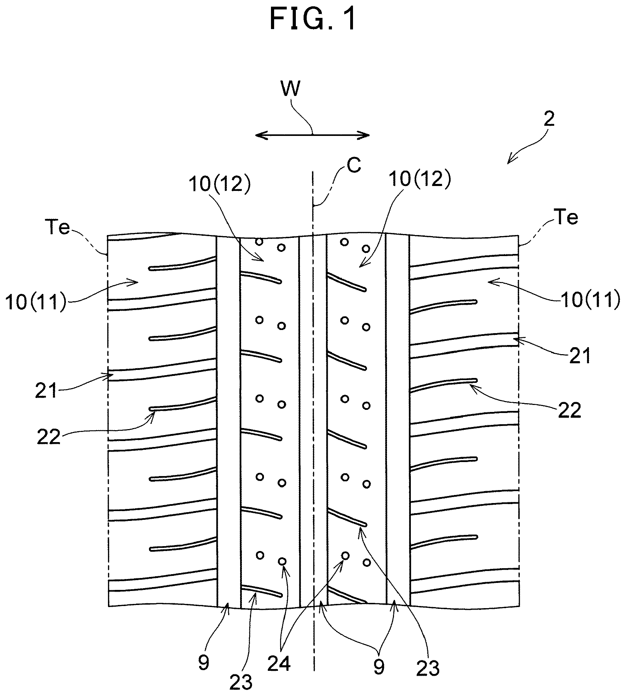

Although FIG. 1 shows a schematic view of the grounding surface in the case where the tread is pressed against the flat surface, the present invention is not limited to such an aspect. In FIG. 1, the tread part 2 comprises circumferential grooves 9 extending continuously in a tire circumferential direction C, and lateral grooves 21 and sipes 22, 23 that extend in a width direction.

Although three circumferential grooves 9 are provided in FIG. 1, the number of circumferential grooves is not particularly limited and may be, for example, two to five. Moreover, although the circumferential grooves 9 linearly extend along the circumferential direction in the present invention, they are not limited to such an aspect and may extend along the circumferential direction, for example, in a wavy, sinusoidal, or zigzag shape.

The tread part 2 has land parts 10 partitioned, in the tire width direction W, by a plurality of circumferential grooves 9. Shoulder land parts 11 are a pair of land parts each formed between a circumferential groove 9 and a tread edge Te. Center land parts 12 are land parts formed between the pair of the shoulder land parts 11. Although two center land parts 12 are provided in FIG. 1, the number of center land parts is not particularly limited and may be, for example, one to five.

The land parts 10 are each preferably provided with a lateral groove (width direction groove) and/or a sipe. In FIG. 1, the shoulder land parts 11 are provided with a plurality of shoulder lateral grooves 21, an end of which opens to the circumferential grooves 9, and a plurality of shoulder sipes 22, one end of which opens to the circumferential grooves 1. The center land parts 12 are provided with a plurality of center sipes 23, one end of which opens to the circumferential grooves 9.

The land parts 10 each preferably have one or more small apertures. In FIG. 1, two small apertures 24 are provided on each land portion surrounded by a tire width direction portion and a tire circumferential portion of a center sipe 23 and another center sipe 23 adjacent to this center sipe 23 in the tire circumferential direction in the center land parts 12. Opening areas of the small apertures to the tread surface are preferably 0.1 mm$^2$ or more, more preferably 0.5 mm$^2$ or more, further preferably 1.0 mm$^2$ or more, particularly preferably 1.5 mm$^2$ or more. Moreover, the opening areas of the small apertures to the tread surface are preferably 15 mm$^2$ or less, more preferably 10 mm$^2$ or less, further preferably 7.0 mm$^2$ or less, particularly preferably 5.0 mm$^2$ or less. When the small apertures having the opening areas as described above are provided, the surface area of the tread part can be increased without a negative influence on other performances. As a result, heat release performance in the tread part becomes good, and thus it is considered that rises in temperatures of the tire and the side part can be suppressed.

A depth at the deepest part of each circumferential groove 9 is preferably 3.0 mm or more, preferably 4.0 mm or more, further preferably 5.0 mm or more. Also, the depth at the deepest part of each circumferential groove 9 is preferably 10.0 mm or less, preferably 9.0 mm or less, further preferably 8.0 mm or less.

A depth at the deepest part of each small aperture 24 is preferably 3% or more, more preferably 5% or more, of the depth at the deepest part of each circumferential groove 9. Moreover, the depth at the deepest part of each small aperture 24 is preferably 80% or less, more preferably 60% or less, further preferably 40% or less, of the depth at the deepest part of each circumferential groove 9.

When, in the tread part 2, an area of the entirety of the land parts is defined as Sr and a total area of the center land parts is defined as $S_{ce}$, $S_{ce}$/Sr is preferably 0.35 or more, more preferably 0.40 or more, further preferably 0.42 or more, particularly preferably 0.44 or more. Moreover, $S_{ce}$/Sr is preferably 0.80 or less, more preferably 0.70 or less, further preferably 0.60 or less, particularly preferably 0.55 or less. When $S_{ce}$/Sr is within the above-described ranges, the rigidity in the center region of the tread part is optimized, the tread part also becomes capable of absorbing a shock when propagated, and thus it is considered that excessive deformation of the side part is suppressed.

The maximum thickness T (mm) of the clinch part 4 is preferably 2.0 mm or more, more preferably 2.5 mm or more, further preferably 3.0 mm or more, particularly preferably 3.5 mm or more, from the viewpoint of the effects of the present invention. Moreover, the maximum thickness T (mm) of the clinch part 4 is preferably 10.0 mm or less, more preferably 8.0 mm or less, further preferably 7.0 mm or less, particularly preferably 6.0 mm or less, from the viewpoint of the effects of the present invention.

A tan δ at 70°C of the rubber composition constituting the clinch part (70°C tan $δ_C$) is 0.11 or less, preferably 0.10 or less, more preferably 0.09 or less, further preferably 0.08 or less, particularly preferably 0.065 or less, from the viewpoint of heat generation. Moreover, the 70°C tan $δ_C$ is preferably 0.02 or more, more preferably 0.03 or more, further preferably 0.04 or more. Besides, the 70°C tan $δ_C$ is measured by the above-described measuring method.

The 70°C tan $δ_C$ can be appropriately adjusted depending on types or compounding amounts of a filler, a plasticizer, a vulcanizing agent, a vulcanization accelerator, and the like. For example, when a compounding amount of the filler (particularly, carbon black) is reduced, the 70°C tan $δ_C$ tends to decrease.

A complex elastic modulus at 70°C of the rubber composition constituting the clinch part (70°CE*$_C$) is preferably 5.0 MPa or more, more preferably 7.0 MPa or more, further preferably 8.0 MPa or more, further preferably 9.0 MPa or more, particularly preferably 10.0 MPa or more, from the viewpoint of suppression of deformation of the clinch part. Moreover, the 70°CE*$_C$ is preferably 20.0 MPa or less, more preferably 18.0 MPa or less, further preferably 16.0 MPa or less, particularly preferably 14.0 MPa or less. Besides, the 70°CE*$_C$ is measured by the above-described measuring method.

The 70°CE*$_C$ can be appropriately adjusted depending on types or compounding amounts of a filler, a plasticizer, a vulcanizing agent, a vulcanization accelerator, and the like. For example, when a compounding amount of the vulcanizing agent (particularly, sulfur) or the vulcanization accelerator is increased, the 70°CE*$_C$ tends to increase.

A modulus at 100% elongation at 23°C of the rubber composition constituting the clinch part (M100c) is preferably 4.0 MPa or more, more preferably 4.2 MPa or more, further preferably 4.6 MPa or more, particularly preferably 5.0 MPa or more, from the viewpoint of the effects of the present invention. Besides, an upper limit value of the M100c is not particularly limited and is usually less than 10 MPa. Besides, the M100c is measured by the above-described measuring method.

The M100c can be appropriately adjusted depending on, for example, types or compounding amounts of a filler, a plasticizer, a vulcanizing agent, a vulcanization accelerator, and the like.

A product (70°CE*$_C$ × G/$W_L$) of 70°CE*$_C$ and G/$W_L$ is 0.075 or more, preferably 0.090 or more, more preferably 0.100 or more, further preferably 0.110 or more, particularly preferably 0.120 or more, from the viewpoint of the effects of the present invention. Moreover, the 70°CE*$_C$ × G/$W_L$ is preferably 0.350 or less, more preferably 0.300 or less, further preferably 0.250 or less, particularly preferably 0.200 or less.

A ratio (70°C tan $δ_C$/70°CE*$_C$) of 70°C tan $δ_C$ to 70°CE*$_C$ is preferably 0.004 or more, more preferably 0.005 or more, further preferably 0.006 or more. Moreover, the 70°C tan $δ_C$/70°CE*$_C$ is preferably 0.020 or less, more preferably 0.018 or less, further preferably 0.016 or less, further preferably 0.014 or less, further preferably 0.012 or less, further preferably 0.010 or less, particularly preferably 0.008 or less. When the 70°C tan $δ_C$/70°CE*$_C$* is within the above-described ranges, heat generation during a rolling motion of the tire can be suppressed. As a result, it is considered that the effects of the present invention can be easily obtained.

A product (T × 70°C tan $δ_C$) of the maximum thickness T (mm) of the clinch part and 70°C tan $δ_C$ is preferably less than 0.05, more preferably less than 0.45, further preferably less than 0.40 mm. When the T × 70°C tan $δ_C$ is within the above-described ranges, effects of suppressing of heat generation in the clinch part and improving heat release performance can be obtained, and thus it is considered that performance on appearance of beauty after high-speed running can be easily improved. Moreover, the T × 70°C tan $\delta_C$ is preferably greater than 0.10, more preferably greater than 0.15, further preferably greater than 0.20.

A product (T × M100c) of the maximum thickness T (mm) of the clinch part and M100c (MPa) is preferably greater than 15.0, more preferably greater than 16.0, further preferably greater than 17.0, further preferably greater than 18.0, further preferably greater than 19.0, particularly preferably greater than 20.0. When the T × M100c is within the above-described ranges, deformation of the clinch part during running is suppressed, and thus it is considered that durability can be improved. Moreover, the T × M100c is preferably less than 60.0, more preferably less than 50.0, further preferably less than 40.0.

A tan $\delta$ at 30°C of the rubber composition constituting the tread part (30°C tan $\delta_T$) is preferably 0.22 or less, more preferably 0.20 or less, further preferably 0.18 or less. A rise in a temperature of the tire during high-speed running can be suppressed by suppressing heat generation of the tread part. As a result, deformation of the clinch part is suppressed, and thus it is considered that durability during high-speed running can be easily improved. Moreover, the 30°C tan $\delta_T$ is preferably 0.08 or more, more preferably 0.10 or more, further preferably 0.12 or more, from the viewpoint of wet grip performance. Besides, the 30°C tan $\delta_T$ is measured by the above-described measuring method.

A ratio (30°C tan $\delta_T$/G) of 30°C tan $\delta_T$ to the tire weight G (kg) is preferably greater than 0.010, more preferably greater than 0.014, further preferably greater than 0.018, particularly preferably greater than 0.022, from the viewpoint of performance on appearance of beauty after high-speed running. Moreover, the 30°C tan $\delta_T$/G is preferably less than 0.050, more preferably less than 0.045, further preferably less than 0.040.

[Rubber composition]

In the tire of the present invention, performance on appearance of beauty after high-speed running can be improved more effectively with cooperation of the tire weight for the maximum load capacity of the tire and the physical property of viscoelasticity of the rubber composition constituting the clinch part.

<Rubber component>

For the rubber composition constituting the clinch part of the present invention (which is, hereinafter, referred to as a "rubber composition of the present invention", unless otherwise noted), a diene-based rubber is appropriately used as a rubber component. Examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These rubber components may be used alone, or two or more thereof may be used in combination. Moreover, as these rubber components, an extended rubber previously extended with oil, a resin, a liquid rubber component, or the like may be used.

A content of the diene-based rubber in the rubber component is preferably greater than 70% by mass, more preferably greater than 80% by mass, further preferably greater than 90% by mass, particularly preferably greater than 95% by mass. Moreover, a rubber component consisting of a diene-based rubber may be used.

Each of the rubber compositions of the present invention preferably comprises, as a rubber component, at least one selected from a group consisting of an isoprene-based rubber, a styrene-butadiene rubber (SBR), and a butadiene rubber (BR), more preferably comprises the isoprene-based rubber, and further preferably comprises the isoprene-based rubber and the BR. A rubber component consisting of the isoprene-based rubber and the BR may be used.

(Isoprene-based rubber)

As the isoprene-based rubber, those common in the tire industry can be used, such as, for example, an isoprene rubber (IR) and a natural rubber. Examples of the natural rubber include not only non-modified natural rubbers (NR) but also modified natural rubbers such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component is preferably 1% by mass or more, more preferably greater than 5% by mass, further preferably greater than 10% by mass, further preferably greater than 20% by mass, particularly preferably greater than 30% by mass. On the other hand, the content of the isoprene-based rubber in the rubber component is preferably less than 80% by mass, more preferably less than 70% by mass, further preferably less than 65% by mass, further preferably less than 60% by mass, further preferably less than 55% by mass, particularly preferably 50% by mass or less.

(BR)

The BR is not particularly limited, and those common in the tire industry can be used, such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination.

As the high cis BR, for example, those commercially available form Zeon Corporation, Ube Industries, Ltd., JSR Corporation, etc. can be used. When the rubber composition comprises the high cis BR, a low temperature property and abrasion resistance can be improved. The cis content of the high cis BR is preferably 95 mol% or more, more preferably 96 mol% or more, further preferably 97 mol% or more. Besides, the cis content of the BR is measured by the above-described measuring method.

A content of the BR when compounded in the rubber component is preferably 1% by mass or more, more preferably greater than 5% by mass, further preferably greater than 10% by mass, further preferably greater than 20% by mass, further preferably greater than 30% by mass, particularly preferably greater than 40% by mass, from the viewpoint of the effects of the present invention. On the other hand, the content of the BR when compounded in the rubber component is preferably less than 85% by mass, more preferably less than 80% by mass, further preferably less than 75% by mass, further preferably less than 70% by mass, particularly preferably 65% by mass or less.

A total content of the isoprene-based rubber and the BR in the rubber component is preferably greater than 60% by mass, more preferably greater than 70% by mass, further preferably greater than 80% by mass, further preferably 85% by mass or more, further preferably greater than 90% by mass, further preferably greater than 95% by mass. A rubber component consisting of the isoprene-based rubber and the BR may be used.

(SBR)

The SBR is not particularly limited, examples of which include an unmodified solution-polymerized SBR (S-SBR), an unmodified emulsion-polymerized SBR (E-SBR), modified SBRs thereof (a modified S-SBR, a modified E-SBR), and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used. These SBRs may be used alone, or two or more thereof may be used in combination.

An oil-extended SBR or a non-oil extended SBR may be used as a SBR. When the oil-extended SBR is used, an oil-extending amount of the SBR, that is, a content of an extending oil in the SBR is preferably 10 to 50 parts by mass based on 100 parts by mass of a rubber solid content of the SBR.

A styrene content of the SBR is preferably less than 40% by mass, more preferably less than 36% by mass, further preferably less than 32% by mass, particularly preferably less than 28% by mass. Moreover, the styrene content of the SBR is preferably greater than 5% by mass, more preferably greater than 7% by mass, further preferably greater than 10% by mass, further preferably greater than 13% by mass, particularly preferably greater than 16% by mass. Besides, the styrene content of the SBR is measured by the above-described measuring method.

A content of the SBR when compounded in the rubber component is preferably less than 20% by mass, more preferably less than 15% by mass, further preferably less than 10% by mass, from the viewpoints of the effects of the present invention. On the other hand, a lower limit value of the content of the SBR in the rubber component is not particularly limited and may be 0 part by mass or can be greater than 0% by mass, 1% by mass, 3% by mass, or 5% by mass.

(Other rubber components)

The rubber component may also comprise other rubber components other than the diene-based rubbers to an extent so as not to affect the effects of the present invention. As the other rubber components other than the diene-based rubbers, a cross-linkable rubber component commonly used in the tire industry can be used, the example of which include, for example, non-diene-based rubbers such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), and a hydrin rubber. These other rubber components may be used alone, or two or more thereof may be used in combination. Moreover, the rubber component may or may not comprise a known thermoplastic elastomer in addition to the above-described rubber components.

<Filler>

The rubber composition according to the present invention preferably comprises carbon black as a filler and may further comprise silica. Moreover, the filler may be prepared as a filler consisting of carbon black.

(Carbon black)

Carbon black is not particularly limited, and those common in the tire industry can be used, such as, for example, GPF, FEF, HAF, ISAF, and SAF. Besides, in addition to carbon black generated by burning general mineral oil, carbon black, for which a biomass material such as lignin is used, may be used. These carbon black may be used alone, or two or more thereof may be used in combination.

An average primary particle size of carbon black is preferably greater than 20 nm, more preferably greater than 25 nm, further preferably greater than 30 nm, further preferably greater than 35 nm, particularly preferably 40 nm or more, from the viewpoint of durability. On the other hand, the average primary particle size is preferably less than 90 nm, more preferably less than 75 nm, further preferably less than 60 nm, particularly preferably 55 nm or less, from the viewpoint of obtaining reinforcing property. Besides, the average primary particle size of carbon black is measured by the above-described measuring method.

A nitrogen adsorption specific surface area ($N_2SA$) of carbon black is preferably less than 90 $m^2/g$, more preferably less than 80 $m^2/g$, further preferably less than 70 $m^2/g$, particularly preferably less than 60 $m^2/g$, from the viewpoint of the effects of the present invention. Moreover, the $N_2SA$ is preferably greater than 10 $m^2/g$, more preferably greater than 20 $m^2/g$, further preferably greater than 30 $m^2/g$. Besides, the $N_2SA$ of carbon black is measured by the above-described measuring method.

A content of carbon black when compounded based on 100 parts by mass of the rubber component is preferably 25 parts by mass or more, preferably 30 parts by mass or more, more preferably 35 parts by mass or more, further preferably 40 parts by mass or more, particularly preferably 45 parts by mass or more, from the viewpoint of the effects of the present invention. Moreover, it is preferably less than 90 parts by mass, more preferably less than 80 parts by mass, further preferably less than 75 parts by mass, further preferably less than 70 parts by mass, further preferably 65 parts by mass or less, particularly preferably 62 parts by mass or less, from the viewpoint of obtaining flexibility to mitigate stress.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable for the reason that it has many silanol groups. Besides, in addition to the above-described silica, silica made from a biomass material such as rice husks may be appropriately used. These silica may be used alone, or two or more thereof may be used in combination.

An average primary particle size of silica is preferably 16 nm or more, more preferably 17 nm or more, further preferably 18 nm or more, from the viewpoint of the effects of the present invention. On the other hand, the average primary particle size is preferably 30 nm or less, more preferably 25 nm or less. Besides, the average primary particle size of silica is measured by the above-described measuring method.

A nitrogen adsorption specific surface area ($N_2SA$) of silica is preferably less than 220 $m^2/g$, more preferably less than 200 $m^2/g$, further preferably less than 180 $m^2/g$, from the viewpoint of the effects of the present invention. On the other hand, the $N_2SA$ is preferably greater than 100 $m^2/g$, more preferably greater than 120 $m^2/g$, further preferably greater than 140 $m^2/g$. Besides, the $N_2SA$ of silica is measured by the above-described measuring method.

A content of silica when compounded based on 100 parts by mass of the rubber component is preferably 2 parts by mass or more, more preferably 5 parts by mass or more, further preferably 8 parts by mass or more, from the viewpoint of obtaining reinforcing property. Moreover, it is preferably 35 parts by mass or less, more preferably 30 parts by mass or less, further preferably 25 parts by mass or less, particularly preferably 20 parts by mass or less, from the viewpoint of obtaining flexibility to mitigate stress.

(Other fillers)

Fillers other than silica and carbon black are not particularly limited, and those conventionally and commonly used in the tire industry can be compounded, such as, for example, aluminum hydroxide, alumina (aluminum oxide), calcium carbonate, magnesium sulfate, talc, clay, and biochar. These other fillers may be used alone, or two or more thereof may be used in combination.

A total content of fillers (preferably, a total content of carbon black and silica) based on 100 parts by mass of the rubber component is preferably 25 parts by mass or more, preferably 30 parts by mass or more, more preferably 35 parts by mass or more, further preferably 40 parts by mass or more, particularly preferably 45 parts by mass or more. Moreover, it is preferably less than 90 parts by mass, more preferably less than 80 parts by mass, further preferably less than 75 parts by mass, further preferably less than 70 parts by mass, further preferably 65 parts by mass or less, further preferably less than 65 parts by mass, particularly preferably 62 parts by mass or less, from the viewpoint of the effects of the present invention.

(Silane coupling agent)

Silica is preferably used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane and NXT-Z100, NXT-Z45, and NXT manufactured by Momentive Performance Materials; sulfide-based silane coupling agents such as bis(3-triethoxysilylpropyl)disulfide and bis(3-triethoxysilylpropyl)tetrasulfide; thioester-based silane coupling agents such as 3-octanoylthio-1 -propyltriethoxysilane, 3-hexanoylthio-1 -propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as $\gamma$-glycidoxypropyltriethoxysilane and $\gamma$-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. Among them, sulfide-based silane coupling agents and/or mercapto-based silane coupling agents are preferable, and sulfide-based silane coupling agents are more preferable. These silane coupling agents may be used alone, or two or more thereof may be used in combination.

A content of the silane coupling agent based on 100 parts by mass of silica is preferably greater than 1 part by mass, more preferably greater than 3 parts by mass, further preferably greater than 5 parts by mass, particularly preferably greater than 8 parts by mass, from the viewpoint of enhancing dispersibility of silica. Moreover, it is preferably less than 20 parts by mass, more preferably less than 18 parts by mass, further preferably less than 16 parts by mass, from the viewpoints of cost and processability.

<Other compounding agents>

The rubber composition according to the present invention can appropriately comprise compounding agents conventionally and commonly used in the tire industry, such as, for example, a plasticizer, wax, stearic acid, zinc oxide, an antioxidant, a vulcanizing agent, and a vulcanization accelerator, in addition to the above-described components.

Examples of the plasticizer include, for example, a resin component, oil, a liquid rubber, and the like.

Examples of the resin component include, but not particularly limited to, a petroleum resin, a terpene-based resin, a rosin-based resin, a phenol-based resin, and the like which are commonly used in the tire industry. These resin components may be used alone, or two or more thereof may be used in combination.

A content of the resin component when compounded based on 100 parts by mass of the rubber component is preferably greater than 1 part by mass, more preferably greater than 3 parts by mass, further preferably greater than 5 parts by mass. Moreover, it is preferably less than 50 parts by mass, more preferably less than 40 parts by mass, further preferably less than 30 parts by mass, from the viewpoint of suppressing heat generation.

Examples of oil include, for example, paraffinic process oils (mineral oils), naphthenic process oils, aromatic process oils, vegetable oils and fats, animal oils and fats, and the like. Specific examples of the process oils include, for example, MES (Mild Extract Solvated), DAE (Distillate Aromatic Extract), TDAE (Treated Distillate Aromatic Extract), TRAE (Treated Residual Aromatic Extract), RAE (Residual Aromatic Extract), and the like. Moreover, a process oil having a low content of a polycyclic aromatic compound (PCA) can also be used for environmental measures. Examples of the process oil having a low PCA content include the MES, the TDAE, a heavy naphthenic oil, and the like. Moreover, from the viewpoint of a life cycle assessment, a waste oil after use for a rubber mixing machine or an engine or one obtained by refining waste cooking oil used in a cooking facility may be used.

A content of oil when compounded based on 100 parts by mass of the rubber component is preferably greater than 1 part by mass, more preferably greater than 3 parts by mass, further preferably greater than 5 parts by mass, from the viewpoint of processability. Moreover, it is preferably less than 90 parts by mass, more preferably less than 70 parts by mass, further preferably less than 50 parts by mass, particularly preferably less than 30 parts by mass, from the viewpoint of abrasion resistance.

The liquid rubber is not particularly limited as long as it is a polymer in a liquid state at a normal temperature (25°C), examples of which include, for example, a liquid butadiene polymer (liquid BR), a liquid isoprene polymer (liquid IR), a liquid styrene-butadiene copolymer (liquid SBR), a liquid styrene-isoprene copolymer (liquid SIR), a copolymer such as myrcene or farnesene, and the like. These liquid rubbers may be used alone, or two or more thereof may be used in combination.

A content of the liquid rubber when compounded based on 100 parts by mass of the rubber component is preferably greater than 1 part by mass, more preferably greater than 3 parts by mass, further preferably greater than 5 parts by mass. Moreover, the content of the liquid polymer is preferably less than 50 parts by mass, more preferably less than 40 parts by mass, further preferably less than 30 parts by mass.

A content of the plasticizer based on 100 parts by mass of the rubber component (a total amount of all of a plurality of plasticizers when used in combination) is preferably greater than 1 part by mass, more preferably greater than 3 parts by mass, further preferably greater than 5 parts by mass. Moreover, the content is preferably less than 90 parts by mass, more preferably less than 70 parts by mass, further preferably less than 50 parts by mass, particularly preferably less than 30 parts by mass.

The wax is not particularly limited, and those common in the tire industry can be used, such as, for example, a petroleum-based wax, a mineral-based wax, and a synthetic wax. Examples of the petroleum-based wax include, for example, a paraffin wax, a microcrystalline wax, and the like. These waxes may be used alone, or two or more thereof may be used in combination.

A content of wax when compounded based on 100 parts by mass of the rubber component is preferably greater than 0.5 parts by mass, more preferably greater than 0.8 parts by mass, from the viewpoint of weather resistance of a rubber. Moreover, it is preferably less than 10 parts by mass, more preferably less than 5.0 parts by mass, from the viewpoint of prevention of whitening of a tire due to bloom.

Examples of the antioxidant include, but not particularly limited to, for example, amine-based, quinoline-based, quinone-based, phenol-based, and imidazole-based compounds, and antioxidants such as a carbamic acid metal salt, preferably phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably greater than 0.5 parts by mass, more preferably greater than 1.0 part by mass, further preferably greater than 2.0 parts by mass, from the viewpoint of ozone crack resistance of a rubber. Moreover, it is preferably less than 10 parts by mass, more preferably less than 5.0 parts by mass, from the viewpoint of abrasion resistance.

A content of stearic acid when compounded based on 100 parts by mass of the rubber component is preferably greater than 0.5 parts by mass, more preferably greater than 1.0 part by mass, further preferably greater than 1.5 parts by mass, from the viewpoint of processability. Moreover, it is preferably less than 10 parts by mass, more preferably less than 5.0 parts by mass, from the viewpoint of vulcanization rate.

A content of zinc oxide when compounded based on 100 parts by mass of the rubber component is preferably greater than 0.5 parts by mass, more preferably greater than 1.0 part by mass, further preferably greater than 1.5 parts by mass, from the viewpoint of processability. Moreover, it is preferably less than 10 parts by mass, more preferably less than 5.0 parts by mass, from the viewpoint of abrasion resistance.

Sulfur is appropriately used as a vulcanizing agent. As sulfur, a powdered sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably greater than 0.1 parts by mass, more preferably greater than 0.5 parts by mass, further preferably greater than 1.0 part by mass, from the viewpoint of securing a sufficient vulcanization reaction. Moreover, it is preferably less than 5.0 parts by mass, more preferably less than 4.0 parts by mass, further preferably less than 3.5 parts by mass, from the viewpoint of prevention of deterioration. Besides, a content of the vulcanizing agent in a case where an oil-containing sulfur is used as the vulcanizing agent shall be a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyl dithio)hexane, and the like. As these vulcanizing agents other than sulfur, those commercially available from Taoka Chemical Co., Ltd., LANXESS, Flexsys, etc. can be used.

Examples of the vulcanization accelerator include, for example, a sulfenamide-based vulcanization accelerator, a thiazole-based vulcanization accelerator, a guanidine-based vulcanization accelerator, a thiuram-based vulcanization accelerator, a dithiocarbamic acid salt-based vulcanization accelerator, caprolactam disulfide, and the like. These vulcanization accelerators may be used alone, or two or more thereof may be used in combination. Among them, one or more vulcanization accelerators selected from a group consisting of the sulfenamide-based vulcanization accelerator, the thiazole-based vulcanization accelerator, and the guanidine-based vulcanization accelerator are preferable, and the sulfenamide-based accelerator is more preferable, from the viewpoint that desired effects can be obtained more appropriately.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, N-tert-butyl-2-benzothiazolyl sulfenamide (TBBS) and N-cyclohexyl-2-benzothiazolyl sulfenamide (CBS) are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenyl guanidine, 1,3-di-o-biphenyl guanidine, 1,3-di-o-cumenyl-2-propionyl guanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably greater than 1.0 part by mass, more preferably greater than 1.5 parts by mass, further preferably greater than 2.0 parts by mass. Moreover, the content of the vulcanization accelerator based on 100 parts by mass of the rubber component is preferably less than 8.0 parts by mass, more preferably less than 6.0 parts by mass, further preferably less than 4.0 parts by mass. When the content of the vulcanization accelerator is within the above-described ranges, breaking strength and elongation tend to be secured.

The rubber composition according to the present invention can be produced by a known method. For example, it can be produced by kneading the respective above-described components with a rubber kneading machine such as an open roll and a sealed type kneader (a Banbury mixer, a kneader, and the like).

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step also can be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire of the present invention comprising the clinch part composed of the rubber composition can be produced by a usual method. That is, the tire can be produced by extruding an unvulcanized rubber composition, in which the above-described components are compounded for a rubber component as appropriate, into a shape of the clinch part, attaching it together with other tire members on a tire forming machine, and molding them by a usual method to form an unvulcanized tire, followed by heating and pressurizing this unvulcanized tire in a vulcanizing machine. Examples of vulcanization conditions include, but not particularly limited to, for example, a method of vulcanizing at 150°C to 200°C for 10 to 30 minutes.

<Application>

The tire of the present invention can be appropriately used as a tire for a passenger car, a tire for a truck/bus, a motorcycle tire, or a racing tire, and among them, the tire is preferably used as a tire for a passenger car. Besides, the tire for a passenger car refers to a tire that is presupposed to be mounted to a vehicle running with four wheels and that has a maximum load capacity of 1000 kg or less. Moreover, the tire of the present invention can be used as an all-season tire, a summer tire, or a winter tire such as a studless tire.

EXAMPLES

Hereinafter, examples considered to be preferable in implementing the present invention (Examples) will be described, though the scope of the present invention is not limited to these Examples only. The invention is only limited to the scope of the appended claims.

Assuming a tire comprising a clinch part composed of a rubber composition obtained in accordance with Table 1 and a tread part having 30°C tan δ described in Table 1, using various chemicals described below, results calculated based on evaluation methods described below are shown in Tables 1 to 4.

Various chemicals used in Examples and Comparative examples are collectively shown below.

NR: TSR 20

BR: Ubepol BR (Registered Trademark) 150B manufactured by Ube Industries, Ltd. (cis content: 97 mol%)

SBR: SBR1502 manufactured by JSR Corporation (E-SBR, styrene content: 23.5% by mass)

Carbon black: Seast SO manufactured by Tokai Carbon Co., Ltd., (FEF, N550, $N_2SA$: 42 $m^2/g$, average primary particle size: 43 nm)

Silica: Ultrasil VN3 manufactured by Evonik Degussa GmbH ($N_2SA$: 175 $m^2/g$, average primary particle size: 18 nm)

Silane coupling agent: Si266 manufactured by Evonik Degussa GmbH (bis(3-triethoxysilylpropyl)disulfide)

Oil: VivaTec 500 manufactured by H&R Group (TDAE oil)

Wax: OZOACE 0355 manufactured by Nippon Seiro Co., Ltd.

Antioxidant 1: Nocrac 6C manufactured by Ouchi Shinko Chemical Industry Co., Ltd. (N-(1,3-dimethylbutyl)-N'-phenyl-p-phenylenediamine)

Antioxidant 2: Nocrac RD manufactured by Ouchi Shinko Chemical Industry Co., Ltd. (poly(2,2,4-trimethyl-1,2-dihydroquinoline))

Stearic acid: Bead stearic acid "CAMELLIA" manufactured by NOF CORPORATION

Zinc oxide: Zinc oxide No. 1 manufactured by Mitsui Mining & Smelting Co., Ltd.

Sulfur: HK-200-5 manufactured by Hosoi Chemical Industry Co., Ltd. (5% oil-containing powdered sulfur)

Vulcanization accelerator: Nocceler CZ manufactured by Ouchi Shinko Chemical Industry Co., Ltd. (N-cyclohexyl-2-benzothiazolylsulfenamide (CBS))

(Examples and Comparative examples)

According to the compounding formulations shown in Tables 1 to 4, using a 1.7 L closed Banbury mixer, chemicals other than sulfur and a vulcanization accelerator are kneaded for 5 minutes until the temperature reaches a discharge temperature of 170°C, to obtain a kneaded product. Next, using a twin-screw open roll, sulfur and the vulcanization accelerator are added to the obtained kneaded product, and the mixture is kneaded for 4 minutes until the temperature reached 105°C, to obtain an unvulcanized rubber composition. The obtained unvulcanized rubber composition is extruded into a shape of a clinch part using an extruder equipped with a mouthpiece having a predetermined shape and attached together with a tread and other tire members to produce an unvulcanized tire, and the unvulcanized tire is press-vulcanized under a condition of a temperature at 170°C for 12 minutes, thereby producing each test tire.

< Measurement of 70°C tan δ and 70°CE*>

Each rubber test piece subjected to vulcanization is prepared by cutting out the rubber test piece having a length of 20 mm, a width of 4 mm, and a thickness of 1 mm from a clinch part of each test tire such that a tangential direction to a tire circumferential direction becomes a long side and a direction of the normal to an interface on the inner side of the clinch part in a tire width direction becomes a thickness direction. For each rubber test piece, a tan δ and a complex elastic module (E*) are measured using EPLEXOR series manufactured by gabo Systemtechnik GmbH under a condition of a temperature at 70°C, an initial strain of 10%, a dynamic strain of 1%, a frequency of 10 Hz, and an extension mode.

< Measurement of 30°C tan δ>

Each rubber test piece subjected to vulcanization is prepared by cutting out the rubber test piece having a length of 20 mm, a width of 4 mm, and a thickness of 1 mm from a tread part of each test tire such that the tangential direction to the tire circumferential direction becomes a long side and the tire width direction becomes a thickness direction. For each rubber test piece, a tan δ is measured using EPLEXOR series manufactured by gabo Systemtechnik GmbH under a condition of a temperature at 30°C, an initial strain of 5%, a dynamic strain of 1%, a frequency of 10 Hz, and an extension mode.

< Measurement of M100>

After preparing a No 7. dumbbell-shaped test piece of 1 mm in thickness that is cut out of a clinch part of each test tire such that the tangential direction to the tire circumferential direction becomes a tensile direction, a tensile test is performed according to JIS K 6251 "Rubber, vulcanized or thermoplastics-Determination of tensile stress-strain properties" under an atmosphere at 23°C under a condition of a tension rate of 3.3 mm/sec, to measure a stress at 100% elongation (M100) (MPa).

<Performance on appearance of beauty after high-speed running>

Standardized rims are assembled to all wheels of a domestic passenger car, and trial tires filled with air at a standardized internal pressure are mounted on the standardized rims. After the passenger car runs 10000 km at 100 km/h, appearance of beauty of a clinch part of each of the tires is evaluated from the viewpoints of a tint and an amount of cracks generated. The evaluations are performed using an integer value of 1 to 5 points, and based on evaluation criteria that the higher the score is, the better the performance on appearance of beauty after high-speed running is, a total score by 20 evaluators is calculated. A total score of a control tire (Comparative example 4 in Tables 1 and 2; Comparative example 9 in Tables 3 and 4) is converted into a reference value (100), and an evaluation result for each test tire is indicated as an index in proportion to the total score.

Table 1: Test tire 1 (size: 175/60R18, rim: 18 × 5.0J)

| | Example | | | | | | |
|---|---|---|---|---|---|---|---|
| | 1 | 2 | 3 | 4 | 5 | 6 | 7 |
| Compounding amount (part by mass) | | | | | | | |
| NR | 50 | 50 | 50 | 50 | 50 | 50 | 50 |
| BR | 50 | 50 | 50 | 50 | 50 | 50 | 50 |
| SBR | - | - | - | - | - | - | - |
| Carbon black | 65 | 65 | 65 | 65 | 62 | 62 | 30 |
| Silica | - | - | - | - | - | - | 20 |
| Silane coupling agent | - | - | - | - | - | - | 1.6 |
| Oil | 10 | 10 | 10 | 10 | 6.0 | 3.0 | |
| Wax | 1.0 | 1.0 | 1.0 | 1.0 | 1.0 | 1.0 | 1.0 |
| Antioxidant 1 | 3.0 | 3.0 | 3.0 | 3.0 | 3.0 | 3.0 | 3.0 |
| Antioxidant 2 | 1.0 | 1.0 | 1.0 | 1.0 | 1.0 | 1.0 | 1.0 |
| Stearic acid | 3.0 | 3.0 | 3.0 | 3.0 | 3.0 | 3.0 | 3.0 |
| Zinc oxide | 3.0 | 3.0 | 3.0 | 3.0 | 3.0 | 3.0 | 3.0 |
| Sulfur | 3.0 | 3.0 | 3.0 | 3.0 | 3.0 | 3.0 | 3.0 |
| Vulcanization accelerator | 2.5 | 2.5 | 2.5 | 2.5 | 2.5 | 2.5 | 2.5 |
| 70°C tan $\delta_C$ | 0.10 | 0.10 | 0.10 | 0.10 | 0.09 | 0.09 | 0.06 |
| 70°CE*$_C$ (MPa) | 9.4 | 9.4 | 9.4 | 9.4 | 10.7 | 11.1 | 10.1 |
| 70°C tan $\delta_C$ / 70°CE*$_C$ | 0.011 | 0.011 | 0.011 | 0.011 | 0.008 | 0.008 | 0.006 |
| M100c (MPa) | 4.3 | 4.3 | 4.3 | 4.3 | 4.8 | 5.6 | 5.2 |
| 30°C tan $\delta_T$ | 0.21 | 0.21 | 0.18 | 0.16 | 0.16 | 0.16 | 0.16 |
| Tire weight G (kg) | 6.5 | 6.0 | 6.0 | 6.0 | 6.0 | 6.0 | 6.0 |
| Maximum load capacity $W_L$ (kg) | 457 | 457 | 457 | 457 | 457 | 457 | 457 |
| G/$W_L$ | 0.0142 | 0.0131 | 0.0131 | 0.0131 | 0.0131 | 0.0131 | 0.0131 |
| 70°CE*$_C$ × G/$W_L$ | 0.134 | 0.123 | 0.123 | 0.123 | 0.140 | 0.146 | 0.133 |
| 30°C tan $\delta_T$ /G | 0.032 | 0.035 | 0.030 | 0.027 | 0.027 | 0.027 | 0.027 |
| V (mm$^3$) | $3.24 \times 10^7$ | $3.24 \times 10^7$ | $3.24 \times 10^7$ | $3.24 \times 10^7$ | $3.24 \times 10^7$ | $3.24 \times 10^7$ | $3.24 \times 10^7$ |

(continued)

| | Example | | | | | | |
|---|---|---|---|---|---|---|---|
| | 1 | 2 | 3 | 4 | 5 | 6 | 7 |
| Compounding amount (part by mass) | | | | | | | |
| Inequality (1): $(Dt^2 \times \pi/4) / Wt$ | 1997 | 1997 | 1997 | 1997 | 1997 | 1997 | 1997 |
| Inequality (2): $(V + 1.5 \times 10^7) / Wt$ | $2.71\times10^5$ | $2.71\times10^5$ | $2.71\times10^5$ | $2.71\times10^5$ | $2.71\times10^5$ | $2.71\times10^5$ | $2.71\times10^5$ |
| Maximum thickness T (mm) of clinch part | 3.9 | 3.6 | 3.6 | 3.6 | 3.6 | 3.6 | 3.6 |
| $T \times 70°C \tan \delta_C$ | 0.39 | 0.36 | 0.39 | 0.39 | 0.32 | 0.32 | 0.22 |
| $T \times M100_C$ | 16.8 | 15.5 | 15.5 | 15.5 | 17.3 | 20.2 | 18.7 |
| $S_{ce} / Sr$ | 0.50 | 0.50 | 0.50 | 0.50 | 0.50 | 0.50 | 0.50 |
| Depth of deepest portion of circumferential groove (mm) | 7.4 | 6.8 | 6.8 | 6.8 | 6.8 | 6.8 | 6.8 |
| Depth of deepest portion of small aperture (mm) | - | - | - | - | - | - | - |
| Opening area of small aperture $(mm^2)$ | - | - | - | - | - | - | - |
| Performance on appearance of beauty | 108 | 114 | 116 | 118 | 120 | 122 | 124 |

| | Example | | | | | |
|---|---|---|---|---|---|---|
| | 8 | 9 | 10 | 11 | 12 | 13 |
| Compounding amount (part by mass) | | | | | | |
| NR | 50 | 35 | 35 | 50 | 50 | 50 |
| BR | 50 | 65 | 50 | 50 | 50 | 50 |
| SBR | - | - | 15 | - | - | - |
| Carbon black | 53 | 62 | 62 | 62 | 62 | 62 |
| Silica | - | - | - | - | - | - |
| Silane coupling agent | - | - | - | - | - | - |
| Oil | - | 3.0 | 3.0 | 3.0 | 3.0 | 3.0 |
| Wax | 1.0 | 1.0 | 1.0 | 1.0 | 1.0 | 1.0 |
| Antioxidant 1 | 3.0 | 3.0 | 3.0 | 3.0 | 3.0 | 3.0 |
| Antioxidant 2 | 1.0 | 1.0 | 1.0 | 1.0 | 1.0 | 1.0 |
| Stearic acid | 3.0 | 3.0 | 3.0 | 3.0 | 3.0 | 3.0 |
| Zinc oxide | 3.0 | 3.0 | 3.0 | 3.0 | 3.0 | 3.0 |
| Sulfur | 3.0 | 3.0 | 3.0 | 3.0 | 3.0 | 3.0 |

(continued)

| | Example | | | | | |
|---|---|---|---|---|---|---|
| | 8 | 9 | 10 | 11 | 12 | 13 |
| Compounding amount (part by mass) | | | | | | |
| Vulcanization accelerator | 2.5 | 2.5 | 2.5 | 2.5 | 2.5 | 2.5 |
| 70°C $\tan \delta_C$ | 0.06 | 0.08 | 0.09 | 0.09 | 0.09 | 0.09 |
| 70°C$E^*_C$ (MPa) | 10.4 | 10.0 | 11.5 | 11.1 | 11.1 | 11.1 |
| 70°C $\tan \delta_C$ / 70°C$E^*_C$ | 0.006 | 0.008 | 0.008 | 0.008 | 0.008 | 0.008 |
| M100c (MPa) | 5.2 | 4.2 | 4.8 | 5.6 | 5.6 | 5.6 |
| 30°C $\tan \delta_T$ | 0.16 | 0.16 | 0.16 | 0.16 | 0.16 | 0.16 |
| Tire weight G (kg) | 6.0 | 6.0 | 6.0 | 6.0 | 6.0 | 6.0 |
| Maximum load capacity $W_L$ (kg) | 457 | 457 | 457 | 457 | 457 | 457 |
| $G/W_L$ | 0.0131 | 0.0131 | 0.0131 | 0.0131 | 0.0131 | 0.0131 |
| 70°C$E^*_C$ × $G/W_L$ | 0.137 | 0.131 | 0.151 | 0.146 | 0.146 | 0.146 |
| 30°C $\tan \delta_T$ /G | 0.027 | 0.027 | 0.027 | 0.027 | 0.027 | 0.027 |
| V (mm$^3$) | $3.24 \times 10^7$ | $3.24 \times 10^7$ | $3.24 \times 10^7$ | $3.24 \times 10^7$ | $3.24 \times 10^7$ | $3.24 \times 10^7$ |
| Inequality (1): (Dt$^2$ × $\pi$/4) / Wt | 1997 | 1997 | 1997 | 1997 | 1997 | 1997 |

| | Example | | | | | |
|---|---|---|---|---|---|---|
| | 8 | 9 | 10 | 11 | 12 | 13 |
| Inequality (2): (V + 1.5 × 10$^7$) / Wt | $2.71 \times 10^5$ | $2.71 \times 10^5$ | $2.71 \times 10^5$ | $2.71 \times 10^5$ | $2.71 \times 10^5$ | $2.71 \times 10^5$ |
| Maximum thickness T (mm) of clinch part | 3.6 | 3.6 | 3.6 | 3.6 | 3.6 | 3.6 |
| T ×70°C $\tan \delta_C$ | 0.22 | 0.29 | 0.32 | 0.32 | 0.32 | 0.32 |
| T ×M100$_C$ | 18.7 | 15.1 | 17.3 | 20.2 | 20.2 | 20.2 |
| $S_{ce}$ / Sr | 0.50 | 0.50 | 0.50 | 0.50 | 0.60 | 0.50 |
| Depth of deepest portion of circumferential groove (mm) | 6.8 | 6.8 | 6.8 | 6.8 | 6.8 | 6.8 |
| Depth of deepest portion of small aperture (mm) | - | - | - | - | - | 0.5 |
| Opening area of small aperture (mm$^2$) | - | - | - | - | - | 7.2 |
| Performance on appearance of beauty | 126 | 128 | 130 | 132 | 134 | 136 |

Table 2: Test tire 1 (size: 175/60R18, rim: 18 × 5.0J)

| | Comparative example | | | | |
|---|---|---|---|---|---|
| | 1 | 2 | 3 | 4 | 5 |
| Compounding amount (part by mass) | | | | | |
| NR | 50 | 50 | 50 | 50 | 50 |
| BR | 50 | 50 | 50 | 50 | 50 |
| SBR | - | - | - | - | - |
| Carbon black | 55 | 45 | 72 | 55 | 45 |
| Silica | - | - | - | - | - |
| Silane coupling agent | - | - | - | - | - |
| Oil | 5.0 | - | 12 | - | - |
| Wax | 1.0 | 1.0 | 1.0 | 1.0 | 1.0 |
| Antioxidant 1 | 3.0 | 3.0 | 3.0 | 3.0 | 3.0 |
| Antioxidant 2 | 1.0 | 1.0 | 1.0 | 1.0 | 1.0 |
| Stearic acid | 3.0 | 3.0 | 3.0 | 3.0 | 3.0 |
| Zinc oxide | 3.0 | 3.0 | 3.0 | 3.0 | 3.0 |
| Sulfur | 1.5 | 1.7 | 3.0 | 4.0 | 1.7 |
| Vulcanization accelerator | 0.6 | 0.6 | 2.5 | 2.5 | 0.6 |
| 70°C tan $\delta_C$ | 0.15 | 0.10 | 0.12 | 0.06 | 0.10 |
| 70°CE*$_C$ (MPa) | 4.4 | 4.3 | 10.5 | 12.2 | 4.3 |
| 70°C tan $\delta_C$ / 70°CE*$_C$ | 0.034 | 0.023 | 0.011 | 0.005 | 0.023 |
| M100c (MPa) | 3.2 | 2.9 | 4.8 | 5.1 | 2.9 |
| 30°C tan $\delta_T$ | 0.21 | 0.21 | 0.16 | 0.16 | 0.16 |
| Tire weight G (kq) | 6.8 | 7.8 | 6.2 | 7.2 | 6.8 |
| Maximum load capacity $W_L$ (kg) | 457 | 457 | 457 | 457 | 457 |
| G/$W_L$ | 0.0149 | 0.0171 | 0.0136 | 0.0158 | 0.0149 |
| 70°CE*$_C$ × G/$W_L$ | 0.066 | 0.074 | 0.143 | 0.193 | 0.064 |
| 30°C tan $\delta_T$ /G | 0.031 | 0.027 | 0.026 | 0.022 | 0.024 |
| V (mm$^3$) | 3.24×107 | 3.24×107 | 3.24×107 | 3.24×107 | 3.24×107 |
| Inequality (1): (Dt$^2$ × $\pi$/4) / Wt | 1997 | 1997 | 1997 | 1997 | 1997 |
| Inequality (2): (V + 1.5 × 10$^7$) / Wt | 2.71×105 | 2.71×105 | 2.71×105 | 2.71×105 | 2.71×105 |
| $S_{ce}$ / Sr | 0.50 | 0.50 | 0.50 | 0.50 | 0.50 |
| Depth of deepest portion of circumferential groove (mm) | 7.5 | 8.6. | 6.8 | 8.8 | 6.8 |
| Depth of deepest portion of small aperture (mm) | - | - | - | - | - |
| Opening area of small aperture (mm$^2$) | - | - | - | - | - |
| Performance on appearance of beauty | 88 | 90 | 96 | 100 | 94 |

Table 3: Test tire 2 (size: 205/55R16, rim: 6.5 × 16J)

| | Example | | | | | | |
|---|---|---|---|---|---|---|---|
| | 14 | 15 | 16 | 17 | 18 | 19 | 20 |
| Compounding amount (part by mass) | | | | | | | |
| NR | 50 | 50 | 50 | 50 | 50 | 35 | 50 |
| BR | 50 | 50 | 50 | 50 | 50 | 50 | 50 |
| SBR | - | - | - | - | - | 15 | - |
| Carbon black | 65 | 65 | 65 | 62 | 30 | 62 | 62 |
| Silica | - | - | - | - | 20 | - | - |
| Silane coupling agent | - | - | - | - | 1.6 | - | - |
| Oil | 10 | 10 | 10 | 3.0 | | 3.0 | 3.0 |
| Wax | 1.0 | 1.0 | 1.0 | 1.0 | 1.0 | 1.0 | 1.0 |
| Antioxidant 1 | 3.0 | 3.0 | 3.0 | 3.0 | 3.0 | 3.0 | 3.0 |
| Antioxidant 2 | 1.0 | 1.0 | 1.0 | 1.0 | 1.0 | 1.0 | 1.0 |
| Stearic acid | 3.0 | 3.0 | 3.0 | 3.0 | 3.0 | 3.0 | 3.0 |
| Zinc oxide | 3.0 | 3.0 | 3.0 | 3.0 | 3.0 | 3.0 | 3.0 |
| Sulfur | 3.0 | 3.0 | 3.0 | 3.0 | 3.0 | 3.0 | 3.0 |
| Vulcanization accelerator | 2.5 | 2.5 | 2.5 | 2.5 | 2.5 | 2.5 | 2.5 |
| 70°C tan $\delta_C$ | 0.10 | 0.10 | 0.10 | 0.09 | 0.06 | 0.09 | 0.09 |
| 70°CE*$_C$ (MPa) | 9.4 | 9.4 | 9.4 | 11.1 | 10.1 | 11.5 | 11.1 |
| 70°C tan $\delta_C$ / 70°CE*$_C$ | 0.011 | 0.011 | 0.010 | 0.008 | 0.006 | 0.008 | 0.008 |
| M100c (MPa) | 4.3 | 4.3 | 4.3 | 5.6 | 5.2 | 4.8 | 5.6 |
| 30°C tan $\delta_T$ | 0.21 | 0.21 | 0.16 | 0.16 | 0.16 | 0.16 | 0.16 |
| Tire weight G (kq) | 7.3 | 6.8 | 6.8 | 6.8 | 6.8 | 6.8 | 6.8 |
| Maximum load capacity $W_L$ (kg) | 515 | 515 | 515 | 515 | 515 | 515 | 515 |
| G/$W_L$ | 0.0142 | 0.0132 | 0.0132 | 0.0132 | 0.0132 | 0.0132 | 0.0132 |
| 70°CE*$_C$ × G/$W_L$ | 0.133 | 0.124 | 0.124 | 0.147 | 0.133 | 0.152 | 0.147 |
| 30°C tan $\delta_T$ /G | 0.029 | 0.031 | 0.024 | 0.024 | 0.024 | 0.024 | 0.024 |
| V (mm$^3$) | $3.77{\times}10^7$ | $3.77{\times}10^7$ | $3.77{\times}10^7$ | $3.77{\times}10^7$ | $3.77{\times}10^7$ | $3.77{\times}10^7$ | $3.77{\times}10^7$ |
| Inequality (1): (Dt$^2$ × $\pi$/4) / Wt | 1529 | 1529 | 1529 | 1529 | 1529 | 1529 | 1529 |
| Inequality (2): (V + 1.5 × 10$^7$) / Wt | $2.57{\times}10^5$ | $2.57{\times}10^5$ | $2.57{\times}10^5$ | $2.57{\times}10^5$ | $2.57{\times}10^5$ | $2.57{\times}10^5$ | $2.57{\times}10^5$ |
| Maximum thickness T (mm) of clinch part | 5.2 | 4.0 | 4.0 | 4.0 | 4.0 | 4.0 | 4.0 |
| T ×70°C tan $\delta_C$ | 0.52 | 0.40 | 0.40 | 0.36 | 0.24 | 0.36 | 0.36 |
| T ×M100$_C$ | 22.4 | 17.2 | 17.2 | 22.4 | 20.8 | 19.2 | 22.4 |
| $S_{ce}$ / Sr | 0.50 | 0.50 | 0.50 | 0.50 | 0.50 | 0.50 | 0.50 |

(continued)

| | Example | | | | | | |
|---|---|---|---|---|---|---|---|
| | 14 | 15 | 16 | 17 | 18 | 19 | 20 |
| Compounding amount (part by mass) | | | | | | | |
| Depth of deepest portion of circumferential groove (mm) | 7.5 | 6.8 | 6.8 | 6.9 | 6.8 | 6.8 | 6.8 |
| Performance on appearance of beauty | 106 | 110 | 112 | 114 | 118 | 124 | 126 |

Table 4: Test tire 2 (size: 205/55R16, rim: 6.5 × 16J)

| | Comparative example | | | | |
|---|---|---|---|---|---|
| | 6 | 7 | 8 | 9 | 10 |
| Compounding amount (part by mass) | | | | | |
| NR | 50 | 50 | 50 | 50 | 50 |
| BR | 50 | 50 | 50 | 50 | 50 |
| SBR | - | - | - | - | - |
| Carbon black | 55 | 45 | 72 | 55 | 45 |
| Silica | - | - | - | - | - |
| Silane coupling agent | - | - | - | - | - |
| Oil | 5.0 | - | 12 | - | - |
| Wax | 1.0 | 1.0 | 1.0 | 1.0 | 1.0 |
| Antioxidant 1 | 3.0 | 3.0 | 3.0 | 3.0 | 3.0 |
| Antioxidant 2 | 1.0 | 1.0 | 1.0 | 1.0 | 1.0 |
| Stearic acid | 3.0 | 3.0 | 3.0 | 3.0 | 3.0 |
| Zinc oxide | 3.0 | 3.0 | 3.0 | 3.0 | 3.0 |
| Sulfur | 1.5 | 1.7 | 3.0 | 4.0 | 1.7 |
| Vulcanization accelerator | 0.6 | 0.6 | 2.5 | 2.5 | 0.6 |
| 70°C tan $\delta_C$ | 0.15 | 0.10 | 0.12 | 0.06 | 0.10 |
| 70°C$E^*_C$ (MPa) | 4.4 | 4.3 | 10.5 | 12.2 | 4.3 |
| 70°C tan $\delta_C$ / 70°C$E^*_C$ | 0.034 | 0.023 | 0.011 | 0.005 | 0.023 |
| M100c (MPa) | 3.2 | 2.9 | 4.8 | 5.1 | 2.9 |
| 30°C tan $\delta_T$ | 0.21 | 0.21 | 0.16 | 0.16 | 0.16 |
| Tire weight G (kg) | 7.6 | 8.1 | 7.1 | 8.1 | 7.6 |
| Maximum load capacity $W_L$ (kg) | 515 | 515 | 515 | 515 | 515 |
| G/$W_L$ | 0.0148 | 0.0157 | 0.0138 | 0.0157 | 0.0148 |
| 70°C$E^*_C$ × G/$W_L$ | 0.065 | 0.068 | 0.145 | 0.192 | 0.064 |
| 30°C tan $\delta_T$ /G | 0.028 | 0.026 | 0.023 | 0.020 | 0.021 |
| V (mm$^3$) | $3.77 \times 10^7$ | $3.77 \times 10^7$ | $3.77 \times 10^7$ | $3. \times 10^7$ | $3.77 \times 10^7$ |

(continued)

| | Comparative example | | | | |
|---|---|---|---|---|---|
| | 6 | 7 | 8 | 9 | 10 |
| Compounding amount (part by mass) | | | | | |
| Inequality (1): $(Dt^2 \times \pi/4) / Wt$ | 1529 | 1529 | 1529 | 1529 | 1529 |
| Inequality (2): $(V + 1.5 \times 10^7) / Wt$ | $2.57 \times 10^5$ | $2.57 \times 10^5$ | $2.57 \times 10^5$ | $2.57 \times 10^5$ | $2.57 \times 10^5$ |
| $S_{ce} / Sr$ | 0.50 | 0.50 | 0.50 | 0.50 | 0.50 |
| Depth of deepest portion of circumferential groove (mm) | 7.5 | 8.6. | 6.7 | 8.7 | 6.7 |
| Performance on appearance of beauty | 90 | 92 | 98 | 100 | 96 |

REFERENCE SIGNS LIST

1    Tire
2    Tread part
3    Sidewall part
4.    Clinch part
5    Bead core
6    Bead apex
7    Braker
8    Rim
9    Circumferential groove
10    Land part
11    Shoulder land part
12    Center land part
21    Shoulder lateral groove
22    Shoulder sipe
23    Center sipe
24    Small aperture
L    Normal line to a plane on an inner side of a clinch part in a tire axial direction
Wt    Tire cross-sectional width
Ht    Tire cross-sectional height
Dt    Tire outer diameter

**Claims**

1.    A tire comprising a tread part and a clinch part,

wherein the clinch part is composed of a rubber composition comprising a rubber component and a filler,
wherein a tan $\delta$ at 70°C of the rubber composition constituting the clinch part (70°C tan $\delta_C$) is 0.11 or less,
**characterized in that**
a ratio ($G/W_L$) of a tire weight G (kg) to the maximum load capacity $W_L$ (kg) of the tire is 0.0150 or less, and
a product (70°CE*c $\times$ G/$W_L$) of a complex elastic modulus at 70°C (MPa) of the rubber composition constituting the clinch part (70°CE*$_C$) and G/$W_L$ is 0.075 or more, preferably 0.090 or more, more preferably 0.100 or more, further preferably 0.110 or more and 0.350 or less,
wherein the tire weight G (kg) is a weight of a single tire excluding a weight of a rim,
wherein the tan $\delta$ at 70°C is a loss tangent measured under a condition of a temperature at 70°C, an initial strain of 10%, a dynamic strain of 1%, a frequency of 10 Hz, and an extension mode,
wherein the (70°CE*$_C$) complex elastic modulus at 70°C (MPa) is measured under a condition of a temperature at 70°C, an initial strain of 10% a dynamic strain of 1%, a frequency of 10 Hz, and an extension mode,
wherein the maximum load capacity $W_L$ (kg) is a value calculated by the following equations (3) and (4) when the tire cross-sectional width measured in the standardized state is defined as Wt (mm), the tire cross-sectional height is defined as Ht (mm), and the tire outer diameter is defined as Dt (mm), and V (mm³) denotes a virtual volume of a space occupied by the tire:

$$V = \{(Dt/2)^2 - (Dt/2 - Ht)^2\} \times \pi \times Wt \qquad (3)$$

$$W_L = 0.000011 \times V + 100 \qquad (4)$$

wherein Wt and Ht are determined as follows:
the tire cross-sectional width Wt is a maximum width between outer surfaces of sidewalls excluding, if any, patterns, letters, or the like, in the above-described state,
wherein the tire cross-sectional height Ht is a distance from a bottom surface of a bead part to an outermost surface of a tread and is one-half of a difference between the outer diameter of the tire and a nominal size of a rim diameter.

2. The tire of claim 1, wherein $G/W_L$ is 0.0140 or less.

3. The tire of claim 1, wherein $G/W_L$ is 0.0135 or less.

4. The tire of any one of claims 1 to 3, wherein 70°CE*$_C$ is 10.0 MPa or more.

5. The tire of any one of claims 1 to 4, wherein a modulus at 100% elongation at 23°C of the rubber composition constituting the clinch part (M100$_C$) is 5.0 MPa or more,
wherein the modulus at 100% elongation is performed in accordance with JIS K 6251 "Rubber, vulcanized or thermoplastics-Determination of tensile stress-strain properties" under an atmosphere at 23°C under a condition of a tension rate of 3.3 mm/sec.

6. The tire of any one of claims 1 to 5, wherein 70°C tan $\delta$c is 0.065 or less.

7. The tire of any one of claims 1 to 6, wherein, when a cross-sectional width of the tire is defined as Wt (mm) and an outer diameter of the tire is defined as Dt (mm), Wt and Dt satisfy the following inequality (1).

$$1800 \leq (Dt^2 \times \pi/4)/Wt \leq 2827.4 \ \cdots \ (1)$$

8. The tire of any one of claims 1 to 7, wherein, when a cross-sectional width of the tire is defined as Wt (mm) and a virtual volume of a space occupied by the tire is defined as V (mm³), V and Wt satisfy the following inequality (2):

$$[(V + 1.5 \times 10^7)/Wt] \leq 2.88 \times 10^5 \ \cdots \ (2),$$

wherein the virtual volume V (mm³) of a space occupied by the tire is determiner according to the following equation (3):

$$V = \{(Dt/2)^2 - (Dt/2 - Ht)^2\} \times \pi \times Wt \ \cdots \ (3)$$

when the tire cross-sectional width measured in the standardized state is defined as Wt (mm), the tire cross-sectional height is defined as Ht (mm), and the tire outer diameter is defined as Dt (mm), wherein Wt and Ht are determined as follows:

the tire cross-sectional width Wt is a maximum width between outer surfaces of sidewalls excluding, if any, patterns, letters, or the like, in the above-described state,
wherein the tire cross-sectional height Ht is a distance from a bottom surface of a bead part to an outermost surface of a tread and is one-half of a difference between the outer diameter of the tire and a nominal size of a rim diameter.

9. The tire of any one of claims 1 to 8, wherein a total content of an isoprene-based rubber and a butadiene rubber in the rubber component constituting the clinch part is greater than 80% by mass, preferably greater than 85% by mass, more preferably greater than 90% by mass.

10. The tire of any one of claims 1 to 9, wherein a total content of the filler based on 100 parts by mass of the rubber component in the rubber composition constituting the clinch part is less than 65 parts by mass, preferably 25 parts by mass or more and less than 65 parts by mass.

11. The tire of any one of claims 1 to 10, wherein the rubber composition constituting the clinch part comprises 35 parts by mass or more, preferably 40 parts by mass or more, more preferably 45 parts by mass or more and less than 90 parts by mass of carbon black whose average primary particle size is 40 nm or more.

12. The tire of any one of claims 1 to 11, wherein a ratio (70°C tan $\delta$c/70°CE*$_C$) of 70°C tan $\delta_C$ to 70°CE*$_C$ (MPa) is 0.004 or more and 0.008 or less.

13. The tire of any one of claims 1 to 12, wherein, when the maximum thickness of the clinch part is defined as T (mm), a product (T × 70°C tan $\delta_C$) of T and 70°C tan $\delta_C$ is less than 0.50, preferably less than 0.45, more preferably greater than 0.10 and less than 0.40,
   wherein the maximum thickness of the clinch part is a maximum thickness T (mm) measured along a normal line (L) to an interface on an inner side of a clinch part (4) in a tire width direction.

14. The tire of any one of claims 5 to 13, wherein, when the maximum thickness of the clinch part is defined as T (mm), a product (T × M100c) of T and M100c (MPa) is greater than 15.0, preferably greater than 16.0, more preferably greater than 17.0,
   wherein the maximum thickness of the clinch part is a maximum thickness T (mm) measured along a normal line (L) to an interface on an inner side of a clinch part (4) in a tire width direction.

15. The tire of any one of claims 1 to 14, wherein a tan $\delta$ at 30°C of the rubber composition constituting the tread part (30°C tan $\delta_T$) is 0.18 or less.

16. The tire of claim 15, wherein a ratio (30°C tan $\delta_T$/G) of 30°C tan $\delta_T$ to the tire weight G (kg) is greater than 0.010, preferably greater than 0.014, more preferably greater than 0.018, further preferably greater than 0.022 and less than 0.050.

17. The tire of any one of claims 1 to 16,

   wherein the tread part comprises

   a pair of shoulder land parts partitioned by a pair of outermost circumferential grooves located at an outermost end in a tire width direction, and
   one or more center land parts located between the pair of shoulder land parts, and

   wherein, when an area of the entirety of the land parts is defined as Sr and a total area of the center land parts is defined as $S_{ce}$, $S_{ce}$/Sr is 0.35 or more and 0.80 or less, preferably 0.40 or more and 0.70 or less, more preferably 0.42 or more and 0.60 or less.

18. The tire of any one of claims 1 to 17,

   wherein the tread part comprises

   a pair of shoulder land parts partitioned by a pair of outermost circumferential grooves located at an outermost end in a tire width direction, and
   one or more center land parts located between the pair of shoulder land parts, and

   wherein at least one of the land parts has one or more small apertures whose opening areas to a tread surface are 0.1 mm$^2$ or more and 15 mm$^2$ or less.

**Patentansprüche**

1. Reifen, umfassend einen Laufflächenteil und einen Clinchteil,

    wobei der Clinchteil aus einer Kautschukzusammensetzung zusammengesetzt ist, die eine Kautschukkomponente und einen Füllstoff umfasst,
    wobei ein tan δ bei 70°C der Kautschukzusammensetzung, die den Clinchteil bildet (70°C tan $\delta_C$), 0,11 oder weniger beträgt,
    **dadurch gekennzeichnet, dass**
    ein Verhältnis (G/$W_L$) eines Reifengewichts G (kg) zur maximalen Belastbarkeit $W_L$ (kg) des Reifens 0,0150 oder weniger beträgt, und
    ein Produkt (70°CE*$_C$ × G/$W_L$) eines komplexen Elastizitätsmoduls bei 70°C (MPa) der Kautschukzusammensetzung, die den Clinchteil bildet (70°CE*$_C$), und G/$W_L$ 0,075 oder mehr, vorzugsweise 0,090 oder mehr, mehr bevorzugt 0,100 oder mehr, weiter bevorzugt 0,110 oder mehr und 0,350 oder weniger beträgt,
    wobei das Reifengewicht G (kg) ein Gewicht eines einzelnen Reifens mit Ausnahme eines Gewichts einer Felge ist,
    wobei der tan δ bei 70°C ein Verlusttangens ist, der unter einer Bedingung einer Temperatur bei 70°C, einer Anfangsdehnung von 10%, einer dynamischen Dehnung von 1%, einer Frequenz von 10 Hz und eines Dehnungsmodus gemessen ist,
    wobei der (70°CE*$_C$) komplexe Elastizitätsmodul bei 70°C (MPa) unter einer Bedingung einer Temperatur bei 70°C, einer Anfangsdehnung von 10%, einer dynamischen Dehnung von 1%, einer Frequenz von 10 Hz und eines Dehnungsmodus gemessen ist,
    wobei die maximale Belastbarkeit $W_L$ (kg) ein Wert ist, der durch die folgenden Gleichungen (3) und (4) berechnet ist, wenn die im standardisierten Zustand gemessene Reifenquerschnittsbreite als Wt (mm) definiert ist, die Reifenquerschnittshöhe als Ht (mm) definiert ist und der Reifenaußendurchmesser als Dt (mm) definiert ist und V (mm$^3$) ein virtuelles Volumen eines Raums bezeichnet, der von dem Reifen eingenommen wird:

    $$V = \{(Dt/2)^2 - (Dt/2 - Ht)^2\} \times \pi \times Wt \quad (3)$$

    $$W_L = 0,000011 \times V + 100 \quad (4)$$

    wobei Wt und Ht wie folgt bestimmt sind:
    die Reifenquerschnittsbreite Wt ist eine maximale Breite zwischen Außenflächen von Seitenwänden mit Ausnahme, falls vorhanden, von Mustern, Buchstaben oder dergleichen in dem oben beschriebenen Zustand, wobei die Reifenquerschnittshöhe Ht ein Abstand von einer unteren Fläche eines Wulstteils zu einer äußersten Fläche einer Lauffläche ist und die Hälfte einer Differenz zwischen dem Außendurchmesser des Reifens und einer Nenngröße eines Felgendurchmessers ist.

2. Reifen nach Anspruch 1, wobei G/$W_L$ 0,0140 oder weniger beträgt.

3. Reifen nach Anspruch 1, wobei G/$W_L$ 0,0135 oder weniger beträgt.

4. Reifen nach einem der Ansprüche 1 bis 3, wobei 70°CE*$_C$ 10,0 MPa oder mehr beträgt.

5. Reifen nach einem der Ansprüche 1 bis 4, wobei ein Modul bei 100% Dehnung bei 23°C der Kautschukzusammensetzung, die den Clinchteil bildet (M100c), 5,0 MPa oder mehr beträgt,
    wobei der Modul bei 100% Dehnung gemäß JIS K 6251 "Rubber, vulcanized or thermoplastics- Determination of tensile stress-strain properties" unter einer Atmosphäre bei 23°C unter einer Bedingung einer Zugrate von 3,3 mm/s durchgeführt wird.

6. Reifen nach einem der Ansprüche 1 bis 5, wobei tan $\delta_C$ bei 70°C 0,065 oder weniger beträgt.

7. Reifen nach einem der Ansprüche 1 bis 6, wobei, wenn eine Querschnittsbreite des Reifens als Wt (mm) definiert ist und ein Außendurchmesser des Reifens als Dt (mm) definiert ist, Wt und Dt die folgende Ungleichung (1) erfüllen.

$$1800 \leq (Dt^2 \times \pi/4)/Wt \leq 2827{,}4 \cdots (1)$$

8. Reifen nach einem der Ansprüche 1 bis 7, wobei, wenn eine Querschnittsbreite des Reifens als Wt (mm) definiert ist und ein virtuelles Volumen eines Raums, der von dem Reifen eingenommen wird, als V ($mm^3$) definiert ist, V und Wt die folgende Ungleichung (2) erfüllen:

$$[(V + 1{,}5 \times 10^7)/Wt] \leq 2{,}88 \times 10^5 \cdots (2),$$

wobei das virtuelle Volumen V ($mm^3$) eines Raums, der von dem Reifen eingenommen wird, gemäß der folgenden Gleichung (3) bestimmt ist:

$$V = \{(Dt/2)^2 - (Dt/2 - Ht)^2\} \times \pi \times Wt \cdots (3)$$

wenn die im standardisierten Zustand gemessene Reifenquerschnittsbreite als Wt (mm) definiert ist, die Reifenquerschnittshöhe als Ht (mm) definiert ist und der Reifenaußendurchmesser als Dt (mm) definiert ist, wobei Wt und Ht wie folgt bestimmt sind:
die Reifenquerschnittsbreite Wt ist eine maximale Breite zwischen Außenflächen von Seitenwänden mit Ausnahme, falls vorhanden, von Mustern, Buchstaben oder dergleichen in dem oben beschriebenen Zustand, wobei die Reifenquerschnittshöhe Ht ein Abstand von einer unteren Fläche eines Wulstteils zu einer äußersten Fläche einer Lauffläche ist und die Hälfte einer Differenz zwischen dem Außendurchmesser des Reifens und einer Nenngröße eines Felgendurchmessers ist.

9. Reifen nach einem der Ansprüche 1 bis 8, wobei ein Gesamtgehalt eines Kautschuks auf Isoprenbasis und eines Butadienkautschuks in der Kautschukkomponente, die den Clinchteil bildet, mehr als 80 Massen-%, vorzugsweise mehr als 85 Massen-%, mehr bevorzugt mehr als 90 Massen-% beträgt.

10. Reifen nach einem der Ansprüche 1 bis 9, wobei ein Gesamtgehalt des Füllstoffs, bezogen auf 100 Massenteile der Kautschukkomponente in der Kautschukzusammensetzung, die den Clinchteil bildet, weniger als 65 Massenteile, vorzugsweise 25 Massenteile oder mehr und weniger als 65 Massenteile beträgt.

11. Reifen nach einem der Ansprüche 1 bis 10, wobei die Kautschukzusammensetzung, die den Clinchteil bildet, 35 Massenteile oder mehr, vorzugsweise 40 Massenteile oder mehr, mehr bevorzugt 45 Massenteile oder mehr und weniger als 90 Massenteile Ruß umfasst, dessen durchschnittliche primäre Teilchengröße 40 nm oder mehr beträgt.

12. Reifen nach einem der Ansprüche 1 bis 11, wobei ein Verhältnis ($70°C \tan \delta_C /70°CE^*_C$) von $70°C \tan \delta_C$ zu $70°CE^*_C$ (MPa) 0,004 oder mehr und 0,008 oder weniger beträgt.

13. Reifen nach einem der Ansprüche 1 bis 12, wobei, wenn die maximale Dicke des Clinchteils als T (mm) definiert ist, ein Produkt ($T \times 70°C \tan \delta_C$) von T und $70°C \tan \delta_C$ weniger als 0,50, vorzugsweise weniger als 0,45, mehr bevorzugt mehr als 0,10 und weniger als 0,40 beträgt,
wobei die maximale Dicke des Clinchteils eine maximale Dicke T (mm) ist, gemessen entlang einer Normalen (L) zu einer Grenzfläche auf einer Innenseite eines Clinchteils (4) in einer Reifenbreitenrichtung.

14. Reifen nach einem der Ansprüche 5 bis 13, wobei, wenn die maximale Dicke des Clinchteils als T (mm) definiert ist, ein Produkt ($T \times M100c$) von T und M100c (MPa) mehr als 15,0, vorzugsweise mehr als 16,0, mehr bevorzugt mehr als 17,0 beträgt,
wobei die maximale Dicke des Clinchteils eine maximale Dicke T (mm) ist, gemessen entlang einer Normalen (L) zu einer Grenzfläche auf einer Innenseite eines Clinchteils (4) in einer Reifenbreitenrichtung.

15. Reifen nach einem der Ansprüche 1 bis 14, wobei ein $\tan \delta$ bei 30°C der Kautschukzusammensetzung, die den Laufflächenteil bildet ($30°C \tan \delta_T$), 0,18 oder weniger beträgt.

16. Reifen nach Anspruch 15, wobei ein Verhältnis ($30°C \tan \delta_T/G$) von $30°C \tan \delta_T$ zum Reifengewicht G (kg) mehr als 0,010, vorzugsweise mehr als 0,014, mehr bevorzugt mehr als 0,018, weiter bevorzugt mehr als 0,022 und weniger als 0,050 beträgt.

**17.** Reifen nach einem der Ansprüche 1 bis 16,
wobei der Laufflächenteil umfasst:

ein Paar Schulterlandteile, die durch ein Paar äußerste Umfangsrillen abgeteilt sind, die sich an einem äußersten Ende in einer Reifenbreitenrichtung befinden, und
einen oder mehrere Mittellandteile, die sich zwischen dem Paar Schulterlandteilen befinden, und
wobei, wenn eine Fläche der Gesamtheit der Landteile als Sr definiert ist und eine Gesamtfläche der Mittellandteile als $S_{ce}$ definiert ist, $S_{ce}$/Sr 0,35 oder mehr und 0,80 oder weniger, vorzugsweise 0,40 oder mehr und 0,70 oder weniger, mehr bevorzugt 0,42 oder mehr und 0,60 oder weniger beträgt.

**18.** Reifen nach einem der Ansprüche 1 bis 17,
wobei der Laufflächenteil umfasst:

ein Paar Schulterlandteile, die durch ein Paar äußerste Umfangsrillen abgeteilt sind, die sich an einem äußersten Ende in einer Reifenbreitenrichtung befinden, und
einen oder mehrere Mittellandteile, die sich zwischen dem Paar Schulterlandteile befinden, und
wobei mindestens einer der Landteile eine oder mehrere kleine Öffnungen aufweist, deren Öffnungsflächen zu einer Lauffläche $0,1$ mm$^2$ oder mehr und $15$ mm$^2$ oder weniger betragen.

**Revendications**

**1.** Pneumatique comprenant une partie bande de roulement et une partie chambre à air,

dans lequel la partie chambre à air est composée d'une composition de caoutchouc comprenant un composant de caoutchouc et une charge,
dans lequel une tan $\delta$ à 70 °C de la composition de caoutchouc constituant la partie chambre à air (tan $\delta_c$ à 70 °C) est de 0,11 ou moins,
**caractérisé en ce que**
un rapport (G/W$_L$) d'un poids G (kg) de pneumatique sur la capacité de charge maximale W$_L$ (kg) du pneumatique est de 0,0150 ou moins, et
un produit (E*$_c$ à 70 °C × G/W$_L$) d'un module élastique complexe à 70 °C (MPa) de la composition de caoutchouc constituant la partie chambre à air (E*$_c$ à 70 °C) et de G/W$_L$ est de 0,075 ou plus, de préférence 0,090 ou plus, plus préférentiellement 0,100 ou plus, encore plus préférentiellement 0,110 ou plus et de 0,350 ou moins,
dans lequel le poids G (kg) du pneumatique est un poids d'un pneumatique seul excluant le poids d'une jante,
dans lequel la tan $\delta$ à 70 °C est une tangente de perte mesurée dans une condition de température à 70 °C, une contrainte initiale de 10 %, une contrainte dynamique de 1 %, une fréquence de 10 Hz et en mode extension,
dans lequel (E*$_c$ à 70 °C) le module élastique complexe à 70 °C (MPa) est mesuré dans une condition de température de 70 °C, une contrainte initiale de 10 % une contrainte dynamique de 1 %, une fréquence de 10 Hz, et en mode extension,
dans lequel la capacité de charge maximale W$_L$ (kg) est une valeur calculée par les équations (3) et (4) suivantes lorsque la largeur de la section transversale du pneumatique mesurée à l'état normalisé est définie comme étant Wt (mm), la hauteur de la section transversale du pneumatique est définie comme étant Ht (mm), et le diamètre extérieur du pneumatique est défini comme étant Dt (mm), et V (mm$^3$) se rapporte au volume virtuel d'un espace occupé par le pneumatique :

$$V = \{(Dt/2)^2 - (Dt/2 - Ht)^2\} \times \pi \times Wt \qquad (3)$$

$$W_L = 0,000011 \times V + 100 \qquad (4)$$

où Wt et Ht sont déterminées comme il suit :
la largeur de la section transversale du pneumatique Wt est une largeur maximale entre des surfaces extérieures de parois latérales excluant, s'ils sont présents, des schémas, des lettres, ou similaires, dans l'état décrit ci-dessus, où la hauteur de la section transversale du pneumatique Ht est une distance à partir d'une surface inférieure d'une partie bourrelet jusqu'à la surface la plus externe d'une bande de roulement et la moitié d'une différence entre le diamètre extérieur du pneumatique et une dimension nominale d'un diamètre de jante.

**2.** Pneumatique selon la revendication 1, dans lequel $G/W_L$ est égal à 0,0140 ou moins.

**3.** Pneumatique selon la revendication 1, dans lequel $G/W_L$ est égal à 0,0135 ou moins.

**4.** Pneumatique selon l'une quelconque des revendications 1 à 3, dans lequel $E^*_c$ à 70 °C est égal à 10,0 MPa ou plus.

**5.** Pneumatique selon l'une quelconque des revendications 1 à 4, dans lequel un module à 100 % d'élongation à 23 °C de la composition de caoutchouc constituant la partie chambre à air ($M100_c$) est de 5,0 MPa ou plus, dans lequel le module à 100 % d'élongation est effectué en accord avec le document JIS K 6251 « Rubber, vulcanized or thermoplastics - Détermination of tensile stress-strain properties » sous une atmosphère à 23 °C sous une condition d'un taux de tension de 3,3 mm/sec.

**6.** Pneumatique selon l'une quelconque des revendications 1 à 5, dans lequel la tan $\delta_c$ à 70 °C est égale à 0,065 ou moins.

**7.** Pneumatique selon l'une quelconque des revendications 1 à 6, dans lequel, lorsqu'une largeur de section transversale du pneumatique est désignée par Wt (mm) et un diamètre extérieur du pneumatique est défini par Dt (mm), Wt et Dt satisfont à l'inégalité suivante (1).

$$1800 \leq (Dt^2 \times \pi/4)/Wt \leq 2827,4 \qquad (1)$$

**8.** Pneumatique selon l'une quelconque des revendications 1 à 7, dans lequel, lorsqu'une largeur de section transversale du pneumatique est définie par Wt (mm) et un volume virtuel d'un espace occupé par le pneumatique est défini par V ($mm^3$), V et Wt satisfont l'inégalité suivante (2) :

$$[(V +1,5 \times 10^7)/Wt] \leq 2,88 \times 10^5 \qquad (2),$$

dans lequel le volume virtuel V ($mm^3$) d'un espace occupé par le pneumatique est déterminé selon l'équation suivante (3) :

$$V = \{(Dt/2)^2 - (Dt/2 - Ht)^2\} \times \pi \times Wt \qquad (3)$$

lorsque la largeur de la section transversale du pneumatique mesurée dans l'état normalisé est définie par Wt (mm), la hauteur de la section transversale du pneumatique est définie par Ht (mm), et le diamètre extérieur du pneumatique est défini par Dt (mm), où Wt et Ht sont déterminées comme il suit :
la largeur de la section transversale du pneumatique Wt est une largeur maximale entre des surfaces extérieures de parois latérales excluant, s'ils sont présents, des schémas, des lettres, ou similaires, dans l'état décrit ci-dessus, où la hauteur de la section transversale du pneumatique Ht est une distance à partir d'une surface inférieure d'une partie bourrelet jusqu'à une surface la plus externe d'une bande de roulement et la moitié d'une différence entre le diamètre extérieur du pneumatique et une dimension nominale d'un diamètre de jante.

**9.** Pneumatique selon l'une quelconque des revendications 1 à 8, dans lequel une teneur totale en caoutchouc à base d'isoprène et en caoutchouc de butadiène dans le composant de caoutchouc constituant la partie chambre à air est supérieure à 80 % en masse, de préférence supérieure à 85 % en masse, plus préférentiellement supérieure à 90 % en masse.

**10.** Pneumatique selon l'une quelconque des revendications 1 à 9, dans lequel une teneur totale de charge sur la base de 100 parties en masse de composant de caoutchouc dans la composition de caoutchouc constituant la partie chambre à air est inférieure à 65 parties en masse, de préférence 25 parties en masse ou plus et inférieure à 65 parties en masse.

**11.** Pneumatique selon l'une quelconque des revendications 1 à 10, dans lequel la composition de caoutchouc constituant la partie chambre à air comprend 35 parties en masse ou plus, de préférence 40 parties en masse ou plus, plus préférentiellement 45 parties en masse ou plus et moins de 90 parties en masse de noir de carbone dont la taille particulaire primaire moyenne est de 40 nm ou plus.

**12.** Pneumatique selon l'une quelconque des revendications 1 à 11, dans lequel un rapport (tan $\delta_c$ à 70 °C/E*$_c$ à 70 °C) de la tan à 70 °C sur E*$_c$ à 70 °C (MPa) est de 0,004 ou plus et 0,008 ou moins.

**13.** Pneumatique selon l'une quelconque des revendications 1 à 12, dans lequel, lorsque l'épaisseur maximale de la partie chambre à air est définie par T (mm), un produit (T × tan à 70 °C) de T et de tan à 70 °C est inférieur à 0,50, de préférence inférieur à 0,45, plus préférentiellement supérieur à 0,10 et inférieur à 0,40,
dans lequel l'épaisseur maximale de la partie chambre à air est une épaisseur maximale T (mm) mesurée le long d'une ligne normale (L) jusqu'à une interface sur un côté intérieur de la partie chambre à air (4) dans la direction de la largeur du pneumatique.

**14.** Pneumatique selon l'une quelconque des revendications 5 à 13, dans lequel, lorsque l'épaisseur maximale de la partie chambre à air est définie par T (mm), un produit (T × M100$_c$) de T et de M100$_c$ (MPa) est supérieur à 15,0, de préférence supérieur à 16,0, plus préférentiellement supérieur à 17,0,
dans lequel l'épaisseur maximale de la partie chambre à air est une épaisseur maximale T (mm) mesurée le long d'une ligne normale (L) jusqu'à une interface sur un côté intérieur de la partie chambre à air (4) dans une direction de la largeur du pneumatique.

**15.** Pneumatique selon l'une quelconque des revendications 1 à 14, dans lequel la tan $\delta$ à 30 °C de la composition de caoutchouc constituant la partie bande de roulement (tan $\delta_T$ à 30 °C) est de 0,18 ou moins.

**16.** Pneumatique selon la revendication 15, dans lequel un rapport (tan $\delta_T$ à 30 °C/G) de la tan $\delta_T$ à 30 °C sur le poids du pneumatique G (kg) est supérieur à 0,010, de préférence supérieur à 0,014, plus préférentiellement supérieur à 0,018, encore plus préférentiellement supérieur à 0,022 et inférieur à 0,050.

**17.** Pneumatique selon l'une quelconque des revendications 1 à 16,

dans lequel la partie bande de roulement comprend
une paire de parties de flancs de roulement cloisonnée par une paire de rainures circonférentielles les plus externes située à une extrémité la plus externe dans une direction de largeur de pneumatique, et
une ou plusieurs parties centrales de roulement situées entre la paire des parties de flans de roulement, et
dans lequel, lorsqu'une aire de la totalité des parties de roulement est définie par Sr et une aire totale des parties de roulement centrales est définie par S$_{ce}$, S$_{ce}$/Sr est égal à 0,35 ou plus et 0,80 ou moins, de préférence 0,40 ou plus et 0,70 ou moins, plus préférentiellement 0,42 ou plus et 0,60 ou moins.

**18.** Pneumatique selon l'une quelconque des revendications 1 à 17, dans lequel la partie bande de roulement comprend

une paire de parties de roulement de flancs cloisonnée par une paire de rainures circonférentielles les plus externes situées à une extrémité la plus externe dans une direction de largeur de pneumatique, et
une ou plusieurs parties de roulement centrales situées entre la paire de parties de roulement de flancs, et
dans lequel au moins une des parties de roulement a une ou plusieurs petites ouvertures dont les aires d'ouverture vers une surface de bande de roulement sont égales à 0,1 mm$^2$ ou plus et 15 mm$^2$ ou moins.

# FIG. 1

# FIG. 2

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019045062 A
- EP 3599108 A1
- EP 3587144 A1
- EP 3202594 A1
- EP 2048192 A1